# EUROPÄISCHE PATENTSCHRIFT

(11) **EP 2 931 786 B1**
(45) Veröffentlichungstag und Bekanntmachung des Hinweises auf die Patenterteilung: **05.05.2021**
(21) Anmeldenummer: 13803050.7
(22) Anmeldetag: 13.12.2013
(51) Int. Cl.: C08G 65/26, C08F 216/14

(54) **VERFAHREN ZUR HERSTELLUNG EINES MAKROMONOMERS**
PROCESS FOR PREPARING A MACROMONOMER
PROCÉDÉ DE FABRICATION D'UN MACROMONOMÈRE

(30) Priorität: 17.12.2012 EP 12197538
(43) Veröffentlichungstag der Anmeldung: 21.10.2015
(73) Patentinhaber: BASF SE, 67056 Ludwigshafen am Rhein (DE)
(72) Erfinder: BITTNER, Christian, 64625 Bensheim (DE); LANGLOTZ, Björn, 83308 Trostberg (DE); WENZKE, Benjamin, 20251 Hamburg (DE); SPINDLER, Christian, Houston, Texas 77062 (US); REICHENBACH-KLINKE, Roland, 83278 Traunstein (DE); KLUMPE, Markus, 68163 Mannheim (DE); MEIER, Nicole, 68307 Mannheim (DE); ANNEN, Ulrich, 67454 Haßloch (DE); OSTROWSKI, Thomas, 68199 Mannheim (DE)
(86) Internationale Anmeldenummer: PCT/EP2013/076499
(87) Internationale Veröffentlichungsnummer: WO 2014/095608

(56) Entgegenhaltungen:
- EP-A1- 2 287 216
- WO-A1-2009/052864
- WO-A1-2012/069477
- WO-A1-2012/069942
- WO-A1-2012/136613
- WO-A2-2010/133527
- US-A- 5 086 142

## Beschreibung

Die vorliegende Erfindung betrifft ein Verfahren zur Herstellung von hydrophob assoziierenden Makromonomeren M und die mittels des erfindungsgemäßen Verfahrens hergestellten neuartigen Makromonomere. Die Makromonomere M umfassen eine copolymerisierbare, ethylenisch ungesättigte Gruppe sowie eine Polyetherstruktur in Blockform, welche aus einem Polyethylenoxy-Block und einem hydrophoben Polyalkylenoxy-Block bestehend aus Alkylenoxy-Einheiten mit mindestens 4 Kohlenstoffatomen besteht. Optional können die Makromonomere M einen endständigen Polyethylenoxy-Block aufweisen. Die mit dem erfindungsgemäßen Verfahren hergestellten Makromonomere eignen sich zur Umsetzung mit weiteren Monomeren, insbesondere mit Acrylamid, zu einem wasserlöslichen, hydrophob assoziierenden Copolymer.

Wasserlösliche, verdickend wirkende Polymere werden in vielen Bereichen der Technik eingesetzt, beispielsweise im Bereich der Kosmetik, in Lebensmitteln, zur Herstellung von Reinigungsmitteln, Druckfarben, Dispersionsfarben oder bei der Erdölförderung. Es sind viele chemisch unterschiedliche Klassen von Polymeren bekannt, welche als Verdicker eingesetzt werden können. Eine wichtige Klasse verdickend wirkender Polymere sind die sogenannten hydrophob assoziierenden Polymere. Hierunter versteht der Fachmann wasserlösliche Polymere, welche seiten- oder endständig hydrophobe Gruppen aufweisen, wie beispielsweise längere Alkylketten. In wässriger Lösung können derartige hydrophobe Gruppen mit sich selbst oder mit anderen Stoffen assoziieren, die hydrophobe Gruppen aufweisen. Hierdurch wird ein assoziatives Netzwerk gebildet, durch das das Medium verdickt wird.

EP 705 854 A1, DE 100 37 629 A1 und DE 10 2004 032 304 A1 offenbaren wasserlösliche, hydrophob assoziierende Copolymere und deren Verwendung, beispielsweise im Bereich der Bauchemie. Die beschriebenen Copolymere umfassen saure, basische oder kationische Monomere, welche den Polymeren die Wasserlöslichkeit verleihen. Als hydrophob assoziierende Monomere enthalten die offenbarten Copolymere jeweils Monomere des nachfolgenden Typs: H₂C=C(R^{x})-COO-(-CH₂-CH₂-O-)q-R^{y} oder auch H₂C=C(R^{x})-O-(-CH₂-CH₂-O-)q-R^{y} wobei R^{x} typischerweise für H oder CH₃ und R^{y} für einen größeren Kohlenwasserstoffrest steht, typischerweise für Kohlenwasserstoffreste mit 8 bis 40 Kohlenstoffatomen.

Weiterhin ist bekannt, hydrophob assoziierende Copolymere im Bereich der Erdölförderung, insbesondere zur tertiären Erdölförderung (Enhanced Oil Recovery, EOR) einzusetzen. Einzelheiten zur Verwendung hydrophob assoziierender Copolymere zur tertiären Erdölförderung sind beispielsweise im Übersichtsartikel von Taylor, K.C. und Nasr-EI-Din, H.A. in J. Petr. Sci. Eng. 1998, 19, 265-280 beschrieben.

Zu den Techniken der tertiären Erdölförderung gehört das so genannte "Polymerfluten". Eine Erdöllagerstätte ist kein unterirdischer "Erdölsee", sondern das Erdöl ist in winzigen Poren des erdölführenden Gesteins festgehalten. Der Durchmesser der Hohlräume in der Formation beträgt üblicherweise nur wenige Mikrometer. Zum Polymerfluten presst man durch Injektionsbohrungen eine wässrige Lösung eines verdickend wirkenden Polymers in eine Erdöllagerstätte ein. Durch das Einpressen der Polymerlösung wird das Erdöl durch die besagten Hohlräume in der Formation von der Injektionsbohrung ausgehend in Richtung der Produktionsbohrung gedrückt, und das Erdöl wird über die Produktionsbohrung gefördert.

Wichtig für diese Anwendung ist es, dass die wässrige Polymerlösung keinerlei Gelpartikel enthält. Bereits kleine Gelpartikel mit Dimensionen im Mikrometerbereich können die feinen Poren in der Formation verstopfen und somit die Erdölförderung zum Erliegen bringen. Hydrophob assoziierende Copolymere zur tertiären Erdölförderung sollten daher einen möglichst geringen Anteil an Gelpartikeln aufweisen. Zudem sollten die Copolymere eine gute verdickende Wirkung aufweisen, d.h. dass eine möglichst hohe Viskosität der in der Regel wässrigen Copolymer-Lösungen erwünscht ist.

In WO 2010/133527 werden die Herstellung von hydrophob assoziierende Monomere vom Typ H₂C=C(R¹)-R⁴-O-(-CH₂-CH(R²)-O-)ₖ-(-CH₂-CH(R³)-O-)ₗ-R⁵ und die nachfolgende Umsetzung mit weiteren hydrophilen Monomeren zu Copolymeren beschrieben. Die beschriebenen Makromonomere weisen eine ethylenisch ungesättigte Gruppe sowie eine Polyetherblockstruktur auf, welche aus einem hydrophilen Polyalkylenoxy-Block bestehend im Wesentlichen aus Ethylenoxy-Einheiten und aus einem terminalen, hydrophoben Polyalkylenoxy-Block bestehend aus Alkylenoxy-Einheiten mit mindestens 4 Kohlenstoffatomen besteht.

Das Dokument WO 2011/015520 beschreibt die Copolymerisation solcher Makromonomere in Gegenwart nichtionischer Tenside und die Verwendung der entstehenden Copolymere zum Polymerfluten.

Im Dokument CN 102146159 wird ebenfalls ein Verfahren zur Herstellung eines Polyvinylether-Monomers beschrieben, wobei das Polyether-Monomer die allgemeinen Formel H₂C=C(R²)-O-R¹-O-(-CₐH₂ₐO)ₙ-(-C_{b}H_{2b}O)ₘ-H aufweist, wobei a und b ganze Zahlen von 2 bis 4 sind, a ist ungleich b, und R₁ eine C₁-C₈-Alkylengruppe ist. Die in diesem Dokument beschriebenen Monomere weisen einen Polyalkylenoxyblock auf, welcher aus Ethylenoxid, Propylenoxid und/oder Butylenoxid aufgebaut ist. Die Alkoxylierung wird bevorzugt bei einer Temperatur im Bereich von 120 bis 160°C und unter Zugabe eines alkalischen Katalysators, beispielsweise Kaliummethanolat, durchgeführt.

Zur Herstellung der Makromonomere geht man im Verfahren gemäß WO 2010/133527 von geeigneten monoethylenisch ungesättigten Alkoholen aus, welche anschließend in einem zweistufigen Prozess alkoxyliert werden, so dass die erwähnte Blockstruktur erhalten wird. Zunächst erfolgt eine Alkoxylierung mit Ethylenoxid, optional im Gemisch mit Propylenoxid und/oder Butylenoxid. In einem zweiten Schritt erfolgt die Alkoxylierung mit Alkylenoxiden mit mindestens 4 Kohlenstoffatomen. Die Beispiele in WO 2010/133527 beschreiben die Durchführung der Alkoxylierung unter Verwendung von KOMe (Kaliummethanolat) als Katalysator bei einer Reaktionstemperatur von 140°C, wobei die Konzentration an Kalium-Ionen über 3 mol-% liegt.

Die Alkoxylierungsreaktion wird häufig basenkatalysiert durchgeführt. Generell ist auch die säurekatalysierte Alkoxylierung unter Verwendung von Brönstedt- oder Lewissäuren oder die katalytische Alkoxylierung, beispielsweise unter Verwendung von Mischhydroxiden (z.B. DE 43 25 237 A1) oder von Doppelmetallcyanid-Katalysatoren (z.B. DE 102 43 361 A1), bekannt.

Bei der basenkatalysierten Alkoxylierung wird üblicherweise der als Ausgangsmaterial verwendete Alkohol in einem Druckreaktor mit Alkalihydroxiden oder Alkalialkoholaten versetzt und in das entsprechende Alkoholat überführt. Anschließend werden meist unter Inertgas-Atmosphäre beispielsweise in mehreren Schritten die Alkylenoxide zudosiert. Um die Reaktion zu kontrollieren und eine Übersättigung des Reaktionsgemisches mit Alkylenoxid zu vermeiden, müssen meist bestimmte Druck- und Temperaturbereiche bei der Alkoxylierung eingehalten werden.

Durch das Verfahren gemäß WO 2010/133527 soll die Bildung vernetzend wirkender Nebenprodukte vermieden werden, so dass die Herstellung von Copolymeren mit niedrigem Gelanteil möglich sein soll. Es hat sich allerdings gezeigt, dass die Herstellverfahren gemäß des Standes der Technik keine verlässliche Methode zur Herstellung von hydrophob assoziierenden Copolymeren mit geringem Gelanteil darstellen. Es zeigten sich schwankende Qualitäten des Copolymers beispielsweise bei Variation von Druck und Reaktionsdauer bei den Alkoxylierungsschritten, so dass zum Teil stark vernetzte Copolymer-Produkte erhalten wurden.

Eine Aufgabe der Erfindung war es daher, ein Verfahren bereit zu stellen, mit dem zuverlässig hydrophob assoziierende Makromonomere hergestellt werden können, die wenige vernetzende Gruppen aufweisen und zu Copolymeren mit geringen Gelanteilen polymerisiert werden können. Das Verfahren soll zudem einfach und kostengünstig durchzuführen sein und den sicherheitstechnischen Anforderungen bei ausreichender Wirtschaftlichkeit (z.B. ausreichend kurze Reaktionszeiten) genügen.

Es wurde gefunden, dass sich bei Verfahren des Standes der Technik vermutlich Monomere mit zwei ethylenisch ungesättigten Gruppen als Nebenprodukt bilden. Diese Nebenprodukte können üblicherweise schwer analytisch erfasst werden. Die vernetzenden, bi-funktionellen Nebenprodukte treten typischerweise in sehr geringen Anteilen von weniger als 1 mol-% auf und weisen in der Regel Molekulargewichtsverteilungen auf, die denen der Produkte sehr ähnlich sind. Daher sind die Abtrennung dieser Nebenprodukte und eine Aufreinigung des Produktes in der Regel nicht möglich. Diese bi-funktionellen Nebenprodukte haben eine vernetzende Wirkung und führen auch in geringen Konzentrationen bei der Copolymerisation zu einer vermehrten Gelbildung. Copolymere mit Gelanteil sind in der Regel nicht mehr filtrierbar und für die Injektion in poröse Matrizen in Erdöllagerstätten nicht mehr verwendbar.

Ein möglicher schematischer Verlauf der Bildung vernetzender Verbindungen ist nachfolgend dargestellt: 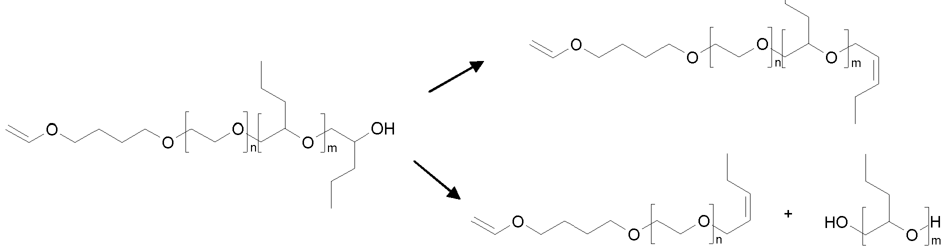 wobei n etwa eine Zahl von 10 bis 150 und m eine Zahl von 5 bis 24 sein kann. Es kann vermutet werden, dass es beispielsweise durch Wasserabspaltung oder Strangbruch zur Bildung einer Doppelbindung kommt. In beiden Fällen bilden sich Verbindungen mit zwei Doppelbindungen, also vernetzend wirkende Verbindungen. Es wurde gefunden, dass diese unerwünschten Nebenreaktionen umso häufiger auftreten, je höher die Temperatur ist, und je länger die Reaktion dauert.

Gängiger Weise wird KOMe (Kaliummethanolat) als basischer Katalysator gegenüber NaOMe (Natriummethanolat) bevorzugt, da KOMe stärker basisch ist als NaOMe und daher die Alkoxylierungsreaktion schneller abläuft. Es wurde allerdings gefunden, dass das stärker basische KOMe die oben beschriebenen Eliminierungen begünstigt. Pentylenoxid und/oder Butylenoxid reagieren deutlich langsamer als Ethylenoxid, daher haben die Eliminierungs-Nebenreaktionen bei der Alkoxylierung mit Pentylenoxid und/oder Butylenoxid einen deutlicheren Effekt.

Es wurde nun überraschend gefunden, dass die Bildung von vernetzenden bi-funktionellen Verbindungen und damit der Gelanteil in den resultierenden Copolymeren vermindert oder nahezu vollständig verhindert werden kann, wenn eine kritische Menge an Kalium-Ionen von kleiner oder gleich 0,9 mol-% und eine Temperatur kleiner oder gleich 135°C im zweiten Alkoxylierungsschritt (Umsetzung mit Pentylenoxid und/oder Butylenoxid) beachtet wird. Es wurde weiterhin festgestellt, dass das erfindungsgemäße Herstellverfahren unter den gegebenen sicherheitstechnischen Anforderungen der Chemie und des Betriebes (insbesondere ein Druck kleiner 2,1 bar bei der Alkoxylierung mit Pentylenoxid und insbesondere ein Druck von kleiner 3,1 bar bei der Alkoxylierung mit Butylenoxid) eine gute Reproduzierbarkeit bei angemessener Reaktionsdauer gewährleistet.

Die vorliegende Erfindung betrifft ein Verfahren zur Herstellung eines Makromonomers M der allgemeinen Formel (I)

H₂C=C(R¹)-R²-O-(-CH₂-CH₂-O-)ₖ-(-CH₂-CH(R³)-O-)ₗ-(-CH₂-CH₂-O-)ₘ-R⁴ (I),

wobei die Einheiten (-CH₂-CH₂-O-)ₖ und (-CH₂-CH(R³)-O-)ₗ und optional -(-CH₂-CH₂-O-)ₘ in Blockstruktur in der in Formel (I) dargestellten Reihenfolge angeordnet sind;

wobei die Reste und Indices die folgenden Bedeutungen haben:
- k:: ist eine Zahl von 10 bis 150, bevorzugt von 10 bis 50, besonders bevorzugt von 15 bis 35, ganz besonders bevorzugt von 23 bis 26;
- l:: ist eine Zahl von 5 bis 25, bevorzugt von 7 bis 18, insbesondere bevorzugt von 8,5 bis 17,25;
- m:: ist eine Zahl von 0 bis 15, bevorzugt von 0 bis 10, bevorzugt 0 bis 5, insbesondere bevorzugt von 0,1 bis 10, besonders bevorzugt von 0,5 bis 10, besonders bevorzugt 0,5 bis 5;
- R¹:: ist H oder Methyl;
- R²:: ist unabhängig voneinander eine Einfachbindung oder eine zweiwertige, verknüpfende Gruppe, ausgewählt aus der Gruppe bestehend aus -(CₙH₂ₙ)- und -O-(C_{n'}H_{2n'})-, wobei n für eine natürliche Zahl von 1 bis 6 steht und n' für eine natürliche Zahl von 2 bis 6 steht;
- R³:: ist unabhängig voneinander ein Kohlenwasserstoffrest mit mindestens 2 Kohlenstoffatomen, bevorzugt mit 2 bis 14, insbesondere bevorzugt mit 2 bis 4 Kohlenstoffatomen, besonders bevorzugt Ethyl und/oder n-Propyl, oder eine Ethergruppe der allgemeinen Formel -CH₂-O-R^{3'}, wobei R^{3'} für einen Kohlenwasserstoffrest mit mindestens 2 Kohlenstoffatomen steht;
- R⁴:: ist unabhängig voneinander H oder ein Kohlenwasserstoffrest mit 1 bis 4 Kohlenstoffatomen;

umfassend die Schritte
a) Umsetzen eines monoethylenisch ungesättigten Alkohols A1 der allgemeinen Formel (II)

   H₂C=C(R¹)-R²-OH (II),

   mit Ethylenoxid, wobei die Reste R¹ und R² die oben definierten Bedeutungen haben;
   unter Zugabe eines alkalischen Katalysators K1 enthaltend KOMe und/oder NaOMe;
   wobei ein alkoxylierter Alkohol A2 erhalten wird;
b) Umsetzen des alkoxylierten Alkohols A2 mit mindestens einem Alkylenoxid Z der Formel (Z) 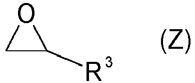 wobei R³ die oben definierte Bedeutung hat; unter Zugabe eines alkalischen Katalysators K2;
   wobei die Konzentration an Kalium-Ionen bei der Umsetzung in Schritt b) kleiner oder gleich 0,9 mol-%, bevorzugt kleiner 0,9 mol-%, bevorzugt im Bereich von 0,01 bis 0,9 mol-%, insbesondere bevorzugt 0,01 bis 0,5 mol-%, bezogen auf den eingesetzten Alkohol A2, beträgt;
   und wobei die Umsetzung in Schritt b) bei einer Temperatur von kleiner oder gleich 135°C, bevorzugt von kleiner 135°C, besonders bevorzugt von kleiner oder gleich 130°C durchgeführt wird;
   wobei ein alkoxylierter Alkohol A3 gemäß der Formel (III),

   H₂C=C(R¹)-R²-O-(-CH₂-CH₂-O-)ₖ-(-CH₂-CH(R³)-O-)ₗ-R⁴ (III)

   mit R⁴ = H erhalten wird, wobei die Reste R¹, R² und R³ und die Indices k und l die oben definierten Bedeutungen haben;
c) optional Umsetzen mindestens eines Teils des alkoxylierten Alkohols A3 mit Ethylenoxid; wobei ein alkoxylierter Alkohol A4 erhalten wird, der dem Makromonomer M gemäß Formel (I) mit R⁴ = H und m größer 0 entspricht;
d) optional Verethern des alkoxylierten Alkohols A3 und/oder A4 mit einer Verbindung

   R⁴-X

   wobei R⁴ ein Kohlenwasserstoffrest mit 1 bis 4 Kohlenstoffatomen ist, und X eine Abgangsgruppe ist, bevorzugt ausgewählt aus Cl, Br, I, -O-SO₂-CH₃ (Mesylat), - O-SO₂-CF₃ (Triflat), und -O-SO₂-OR⁴;
   und wobei ein Makromonomer M gemäß Formel (I) und/oder (III) mit R⁴ = Kohlenwasserstoffrest mit 1 bis 4 Kohlenstoffatomen erhalten wird.

Die Erfindung betrifft das oben beschriebene Verfahren zur Herstellung eines Makromonomers M der allgemeinen Formel (I), wobei k eine Zahl von 10 bis 150, bevorzugt von 10 bis 50, besonders bevorzugt von 15 bis 35, insbesondere bevorzugt von 20 bis 28, ganz besonders bevorzugt von 23 bis 26 ist.

In einer weiteren Ausführungsform betrifft die Erfindung das oben beschriebene erfindungsgemäße Verfahren, mit
l: ist eine Zahl von 5 bis 30, bevorzugt von 5 bis 28, bevorzugt von 5 bis 25, bevorzugt von 7 bis 23, besonders bevorzugt von 7 bis 18, insbesondere bevorzugt von 8,5 bis 17,25.

Die vorliegende Erfindung betrifft ferner ein Makromonomer erhältlich durch das erfindungsgemäße Verfahren. Das erfindungsgemäße Makromonomer M kann mit mindestens einem monoethylenisch ungesättigten, hydrophilen Monomer (b) copolymerisiert werden und verleiht dem resultierenden Copolymer hydrophob assoziierende Eigenschaften. Es wird daher im Folgenden auch als hydrophob assoziierendes Makromonomer M bezeichnet.

Schritt a) des erfindungsgemäßen Verfahrens umfasst die Umsetzung eines monoethylenisch ungesättigten Alkohols A1 mit Ethylenoxid unter Zugabe eines alkalischen Katalysators K1 enthaltend KOMe (Kaliummethanolat) und/oder NaOMe (Natriummethanolat), wobei ein alkoxylierter Alkohol A2 erhalten wird.

Die im Folgenden genannten bevorzugten Bedingungen (z.B. Druck- und/oder Temperaturbereiche) bei den Umsetzungen gemäß Schritt a), b), c) und/oder d) bedeuten, dass der jeweilige Schritt ganz oder teilweise bei den angegebenen Bedingungen durchgeführt wird.

Bevorzugt umfasst Schritt a) zunächst die Umsetzung des monoethylenisch ungesättigten Alkohols A1 mit dem alkalischen Katalysator K1. Typischerweise wird dazu der als Ausgangsmaterial verwendete Alkohol A1 in einem Druckreaktor mit einem alkalischen Katalysators K1 versetzt. Durch verminderten Druck von typischerweise kleiner 100 mbar, bevorzugt im Bereich von 50 bis 100 mbar und/oder Erhöhung der Temperatur typischerweise im Bereich von 30 bis 150°C können noch in der Mischung vorhandenes Wasser und/oder Niedrigsieder abgezogen werden. Der Alkohol liegt danach im Wesentlichen als entsprechendes Alkoholat vor. Anschließend wird das Reaktionsgemisch typischerweise mit Inertgas (z.B. Stickstoff) behandelt.

Insbesondere können durch verminderten Druck von typischerweise kleiner 100 mbar, bevorzugt im Bereich von 30 bis 100 mbar und/oder Erhöhung der Temperatur typischerweise im Bereich von 30 bis 150°C noch in der Mischung vorhandenes Wasser und/oder Niedrigsieder abgezogen werden.

Bevorzugt umfasst Schritt a) die Zugabe von Ethylenoxid zu der einer Mischung aus Alkohol A1 und alkalischem Katalysator K1 (wie oben beschrieben). Nach Beendigung der Zugabe des Ethylenoxids lässt man das Reaktionsgemisch typischerweise nachreagieren. Die Zugabe und/oder Nachreaktion erfolgt typischerweise über einen Zeitraum von 2 bis 36 h, bevorzugt von 5 bis 24 h, insbesondere bevorzugt von 5 bis 15 h, besonders bevorzugt von 5 bis 10 h.

Die Dauer der Nachreaktion beträgt typischerweise zwischen 0,5 bis 1 h. Die Zugabe inklusiver optionaler Entspannung (d.h. der zwischenzeitliche Reduzierung des Drucks, von beispielsweise von 6 bar auf beispielsweise 3 bar absolut) sowie inklusive Nachreaktion erfolgt typischerweise über einen Zeitraum von 2 bis 36 h, bevorzugt von 5 bis 24 h, insbesondere bevorzugt von 5 bis 15 h, besonders bevorzugt von 5 bis 10 h.

Schritt a) erfolgt typischerweise bei Temperaturen von 60 bis 180°C, bevorzugt von 130 bis 150°C, besonders bevorzugt von 140 bis 150°C. Insbesondere umfasst Schritt a) die Zugabe des Ethylenoxids zu der Mischung aus Alkohol A1 und alkalischem Katalysator K1 bei einer Temperatur von 60 bis 180°C, bevorzugt von 130 bis 150°C, besonders bevorzugt von 140 bis 150°C.

Bevorzugt erfolgt die Zugabe des Ethylenoxids zu der Mischung aus Alkohol A1 und alkalischem Katalysator K1 bei einem Druck im Bereich von 1 bis 7 bar, bevorzugt im Bereich von 1 bis 5 bar. Um den sicherheitstechnischen Bedingungen gerecht zu werden wird die Zugabe in Schritt a) typischerweise bei einem Druck im Bereich von 1 bis 3,1 bar, bevorzugt 1 bis 2,1 bar, durchgeführt. Insbesondere werden die Zugabe an Ethylenoxid und/oder die Nachreaktion bei den oben genannten Drücken durchgeführt.

Bevorzugt erfolgt die Zugabe des Ethylenoxids zu der Mischung aus Alkohol A1 und alkalischem Katalysator K1 bei einem Druck im Bereich von 1 bis 7 bar, bevorzugt im Bereich von 1 bis 6 bar. Um den sicherheitstechnischen Bedingungen gerecht zu werden wird die Zugabe in Schritt a) typischerweise bei einem Druck im Bereich von 1 bis 4 bar, bevorzugt von 1 bis 3,9 bar bevorzugt von 1 bis 3,1 bar, durchgeführt. Insbesondere werden die Zugabe an Ethylenoxid und/oder die Nachreaktion bei den oben genannten Drücken durchgeführt.

Bevorzugt umfasst Schritt a) die Zugabe des Ethylenoxids zu einer Mischung aus Alkohol A1 und alkalischem Katalysator K1 über einen Zeitraum von kleiner oder gleich 36 h, bevorzugt kleiner oder gleich 32 h, besonders bevorzugt über einen Zeitraum von 2 bis 32 h, insbesondere bevorzugt über einen Zeitraum von 5 bis 15 h, und bei einem Druck von kleiner oder gleich 5 bar, bevorzugt bei 1 bis 3,1 bar, insbesondere bevorzugt 1 bis 2,1 bar. Insbesondere umfasst der oben angegebene Zeitraum die Zugabe an Ethylenoxid und/oder die Nachreaktion.

Bevorzugt umfasst Schritt a) die Zugabe des Ethylenoxids zu einer Mischung aus Alkohol A1 und alkalischem Katalysator K1 über einen Zeitraum von kleiner oder gleich 36 h, bevorzugt kleiner oder gleich 32 h, besonders bevorzugt über einen Zeitraum von 2 bis 32 h, insbesondere bevorzugt über einen Zeitraum von 5 bis 15 h, und bei einem Druck von kleiner oder gleich 5 bar, bevorzugt bei 1 bis 4 bar, bevorzugt von 1 bis 3,9 bar, bevorzugt von 1 bis 3,1 bar. Insbesondere umfasst der oben angegebene Zeitraum die Zugabe an Ethylenoxid und/oder die Nachreaktion.

Insbesondere kann die Umsetzung eines monoethylenisch ungesättigten Alkohols A1 mit Ethylenoxid unter Zugabe eines alkalischen Katalysators K1 enthaltend KOMe (Kaliummethanolat) und/oder Natriummethanolat (NaOMe) gemäß Schritt a) des erfindungsgemäßen Verfahrens in einem oder mehreren Ethoxylierungsschritten erfolgen. Bevorzugt ist ein Verfahren wie oben beschrieben, wobei Schritt a) die folgenden Schritte umfasst:
Umsetzung des monoethylenisch ungesättigten Alkohols A1 mit dem alkalischen Katalysator K1,
Umsetzung der Mischung aus Alkohol A1 und Katalysator K1 mit einem Teil des Ethylenoxids, insbesondere 10 bis 50 Gew.-%, insbesondere 10 bis 30 Gew.-%, der Gesamtmenge an Ethylenoxid,
einen Zwischenschritt umfassend eine Ruhephase und/oder eine Druckentspannung,
und die Umsetzung mit dem verbleibenden Teil des Ethylenoxids.

Weiterhin bevorzugt ist ein Verfahren wie oben beschrieben, wobei Schritt a) die folgenden Schritte umfasst
Umsetzung des monoethylenisch ungesättigten Alkohols A1 mit dem alkalischen Katalysator K1,
Umsetzung der Mischung aus Alkohol A1 und Katalysator K1 mit einem Teil des Ethylenoxids, insbesondere 50 bis 98 Gew.-%, insbesondere 80 bis 98 Gew.-%, der Gesamtmenge an Ethylenoxid,
einen Schritt zur Entfernung von Niedrigsiedern unter Druckentspannung auf einen Druck kleiner 100 mbar, bevorzugt bei 50 bis 100 mbar, insbesondere bevorzugt bei 30 bis 100 mbarund/oder Erhöhung der Temperatur typischerweise im Bereich von 30 bis 150°C,
Umsetzung des erhaltenen Ethoxylierungsproduktes mit dem alkalischen Katalysators K1 und Umsetzung des verbleibenden Teils des Ethylenoxids mit der Mischung aus Ethoxylierungsprodukt und alkalischem Katalysator K1.

Der alkalische Katalysator K1 enthält insbesondere 10 bis 100 Gew.-%, bevorzugt 20 bis 90 Gew.-% KOMe und/oder NaOMe. Der Katalysator K1 kann neben KOMe und/oder NaOMe weitere alkalische Verbindungen und/oder ein Lösemittel (insbesondere einen C1 bis C6 Alkohol) enthalten. Beispielsweise kann eine weitere alkalische Verbindung enthalten sein ausgewählt aus Alkalimetallhydroxiden, Erdalkalimetallhydroxiden, C2 bis C6 Kaliumalkanolaten, C2 bis C6 Natriumalkanolaten (bevorzugt Ethanolat), Erdalkalialkanolaten (insbesondere C1 bis C6 Alkanolaten, bevorzugt Methanolat und/oder Ethanolat). Bevorzugt enthält der Katalysator K1 neben KOMe und/oder NaOMe mindestens eine weitere alkalische Verbindung ausgewählt aus Natriumhydroxid und Kaliumhydroxid. In einer anderen bevorzugten Ausführungsform besteht der alkalische Katalysator K1 aus KOMe oder aus einer Lösung von KOMe in Methanol (MeOH). Typischerweise kann eine Lösung von 20 bis 50 Gew.-% KOMe in Methanol (MeOH) eingesetzt werden. In einer anderen bevorzugten Ausführungsform besteht der alkalische Katalysator K1 aus NaOMe oder aus einer Lösung von NaOMe in Methanol. In einer weiteren bevorzugten Ausführungsform besteht der Katalysator K1 aus einer Mischung von KOMe und NaOMe oder einer Lösung von KOMe und NaOMe in Methanol.

Es ist vorteilhaft den Katalysator K1 in einer solchen Menge einzusetzen, dass eine Obergrenze von 2.500 ppm (ca. 0,4 mol-%) KOMe in Bezug auf den eingesetzten Alkohol A1 eingehalten wird, um die Zersetzung des monoethylenisch ungesättigten Alkohols A1 zu vermeiden. Bevorzugt beträgt die Konzentration an Kalium-Ionen in Schritt a) kleiner oder gleich 0,4 mol-% bezogen auf die Gesamtmenge des eingesetzten Alkohols A1, besonders bevorzugt 0,1 bis 0,4 mol-%.

Wird KOMe in einer solchen Menge zugegeben, dass die Konzentration über 0,9 mol-% bezogen auf den alkoxylierten Alkohol A2 (Produkt des Verfahrensschritts a)) liegt, so muss KOMe vor Schritt b) ganz oder teilweise abgetrennt werden, um eine Kalium-IonenKonzentration von weniger als 0,9 mol-% in Verfahrensschritt b) zu erhalten. Dies kann beispielsweise erfolgen indem der alkoxylierte Alkohol A2 nach Schritt a) isoliert und optional gereinigt wird.

In einer weiteren bevorzugten Ausführungsform wird KOMe in einer solchen Menge eingesetzt, dass die Konzentration an Kalium-Ionen nach der Umsetzung in Schritt a) bereits kleiner oder gleich 0,9 mol-% bezogen auf A2 beträgt.

Schritt b) des erfindungsgemäßen Verfahrens umfasst die Umsetzung des alkoxylierten Alkohols A2 mit mindestens einem Alkylenoxid Z unter Zugabe eines alkalischen Katalysators K2, wobei ein alkoxylierter Alkohol A3 gemäß der Formel (III),

H₂C=C(R¹)-R²-O-(-CH₂-CH₂-O-)ₖ-(-CH₂-CH(R³)-O-)ₗ-R⁴ (III)

mit R⁴ = H erhalten wird, wobei die Reste R¹, R² und R³ und die Indices k und l die oben definierten Bedeutungen haben.

Bevorzugt umfasst Schritt b) zunächst die Umsetzung des alkoxylierten Alkohols A2 mit dem alkalischen Katalysator K2. Typischerweise wird dazu der Alkohol A2 in einem Druckreaktor mit dem alkalischen Katalysators K2 versetzt. Durch verminderten Druck von typischerweise kleiner 100 mbar, bevorzugt im Bereich von 50 bis 100 mbar, insbesondere bevorzugt von 30 bis 100 mbar und/oder Erhöhung der Temperatur, typischerweise im Bereich von 30 bis 150°C, können noch in der Mischung vorhandenes Wasser und/oder Niedrigsieder abgezogen werden. Der Alkohol liegt danach im Wesentlichen als entsprechendes Alkoholat vor. Anschließend wird das Reaktionsgemisch typischerweise mit Inertgas (z.B. Stickstoff) behandelt.

Bevorzugt umfasst Schritt b) die Zugabe des mindestens einen Alkylenoxids Z zu der oben beschriebenen Mischung aus Alkohol A2 und alkalischem Katalysator K2. Nach Beendigung der Zugabe des Alkylenoxids Z lässt man das Reaktionsgemisch typischerweise nachreagieren. Die Zugabe und/oder Nachreaktion erfolgt typischerweise über einen Zeitraum von 2 bis 36 h, bevorzugt von 5 bis 24 h, insbesondere bevorzugt von 5 bis 20 h, besonders bevorzugt von 5 bis 15 h. Insbesondere erfolgt die Zugabe inklusiver optionaler Entspannung sowie inklusive Nachreaktion typischerweise über einen Zeitraum von 2 bis 36 h, bevorzugt von 5 bis 30 h, insbesondere bevorzugt von 10 bis 28 h, besonders bevorzugt von 11 bis 24 h.

Erfindungsgemäß beträgt die Konzentration an Kalium-Ionen bei der Umsetzung in Schritt b) kleiner oder gleich 0,9 mol-%, bevorzugt kleiner 0,9 mol-%, bevorzugt von 0,01 bis 0,9 mol-%, besonders bevorzugt von 0,1 bis 0,6 mol-%, bezogen auf den eingesetzten Alkohol A2. In einer bevorzugten Ausführungsform beträgt die Konzentration an Kalium-Ionen bei der Umsetzung in Schritt b) 0,01 bis 0,5 mol-% bezogen auf den eingesetzten Alkohol A2.

In einer besonders bevorzugten Ausführungsform beträgt die Konzentration an Kalium-Ionen bei der Umsetzung in Schritt b) kleiner oder gleich 0,9 mol-%, bevorzugt 0,1 bis 0,5 mol-%, bezogen auf den eingesetzten Alkohol A2 und die Umsetzung in Schritt b) wird bei Temperaturen von 120 bis 130°C durchgeführt.

Der alkalische Katalysator K2 enthält bevorzugt mindestens eine alkalische Verbindung ausgewählt aus Alkalimetallhydroxiden, Erdalkalimetallhydroxiden, Alkalimetallalkanolaten (insbesondere C1 bis C6 Alkanolate, bevorzugt Methanolat und/oder Ethanolat), Erdalkalialkanolaten (insbesondere C1 bis C6 Alkanolate, bevorzugt Methanolat und/oder Ethanolat). Bevorzugt enthält der Katalysator K2 mindestens eine basische NatriumVerbindung, insbesondere ausgewählt aus NaOH, NaOMe, und NaOEt, besonders bevorzugt NaOMe oder NaOH. Als Katalysator K2 kann eine Mischung der genannten alkalischen Verbindungen eingesetzt werden, bevorzugt besteht der Katalysator K2 aus einer der genannten basischen Verbindungen oder Mischungen der genannten alkalischen Verbindungen. Häufig wird eine wässrige Lösung der alkalischen Verbindungen eingesetzt. In einer anderen bevorzugten Ausführungsform besteht der alkalische Katalysator K2 aus NaOMe oder aus einer Lösung von NaOMe in Methanol (MeOH). Typischerweise kann eine Lösung von 20 bis 50 Gew.-% NaOMe in Methanol (MeOH) eingesetzt werden. Bevorzugt enthält der Katalysator K2 kein KOMe.

Bevorzugt wird in Schritt b) ein Katalysator K2 enthaltend mindestens eine basische NatriumVerbindung, insbesondere ausgewählt aus NaOH, NaOMe, und NaOEt eingesetzt, wobei die Konzentration an Natrium-Ionen bei der Umsetzung in Schritt b) im Bereich von 3,5 bis 12 mol-%, bevorzugt von 3,5 bis 10 mol-%, besonders bevorzugt von 3,5 bis 7 mol-%, ganz besonders bevorzugt von 4 bis 5,5 mol-%, bezogen auf den eingesetzten Alkohol A2, liegt. Erfindungsgemäß wird die Umsetzung in Schritt b) bei einer Temperatur von kleiner oder gleich 135°C, bevorzugt bei kleiner oder gleich 130°C durchgeführt. Bevorzugt wird die Umsetzung in Schritt b) bei Temperaturen von 60 bis 135°C, bevorzugt bei 100 bis 135°C, besonders bevorzugt bei 120 bis 135°C, ganz besonders bevorzugt bei 120 bis 130°C durchgeführt. Insbesondere umfasst Schritt b) die Zugabe des mindestens einen Alkylenoxids Z zu einer Mischung aus Alkohol A2 und alkalischem Katalysator K2 bei einer Temperatur von kleiner oder gleich 135°C, bevorzugt bei kleiner oder gleich 130°C, insbesondere bevorzugt bei Temperaturen von 60 bis 135°C, besonders bevorzugt bei 100 bis 135°C, besonders bevorzugt bei 120 bis 130°C.

Bevorzugt wird Schritt b) bei einem Druck im Bereich von 1 bis 6 bar, bevorzugt von 1 bis 3,1 bar, besonders bevorzugt von 1 bis 2,1 bar durchgeführt. Bevorzugt wird die Umsetzung in Schritt b) bei einem Druck im Bereich von 1 bis 6 bar, bevorzugt von 1 bis 3,1 bar oder bevorzugt von 4 bis 6 bar durchgeführt, falls R³ für einen Kohlenwasserstoffrest mit 2 Kohlenstoffatomen steht. Insbesondere werden die Zugabe an Alkylenoxid Z und/oder die Nachreaktion bei dem oben genannten Druck durchgeführt.

Bevorzugt wird Schritt b) bei einem Druck im Bereich von 1 bis 3,1 bar, bevorzugt von 1 bis 2,1 bar durchgeführt. Um den sicherheitstechnischen Bedingungen gerecht zu werden, wird die Umsetzung in Schritt b) bevorzugt bei einem Druck im Bereich kleiner oder gleich 3,1 bar (bevorzugt 1 bis 3,1 bar) durchgeführt, falls R³ für einen Kohlenwasserstoffrest mit 2 Kohlenstoffatomen steht, oder bei einem Druck von kleiner oder gleich 2,1 bar (bevorzugt 1 bis 2,1 bar) durchgeführt, falls R³ für einen Kohlenwasserstoffrest mit mehr als 2 Kohlenstoffatomen steht. Insbesondere werden die Zugabe an Alkylenoxid Z und/oder die Nachreaktion bei dem oben genannten Druck durchgeführt.

Bevorzugt umfasst Schritt b) die Zugabe des mindestens einen Alkylenoxids Z zu einer Mischung aus Alkohol A2 und alkalischem Katalysator K2 bei einem Druck im Bereich 1 bis 3,1 bar, bevorzugt 1 bis 2,1 bar. Bevorzugt steht R³ für einen Kohlenwasserstoffrest mit 2 Kohlenstoffatomen und Schritt b) umfasst die Zugabe des mindestens einen Alkylenoxids Z zu einer Mischung aus Alkohol A2 und alkalischem Katalysator K2 bei einem Druck im Bereich von 1 bis 3,1 bar; oder bevorzugt steht R³ für einen Kohlenwasserstoffrest mit mindestens 3 Kohlenstoffatomen (bevorzugt mit 3 Kohlenstoffatomen) und Schritt b) umfasst die Zugabe des mindestens einen Alkylenoxids Z zu einer Mischung aus Alkohol A2 und alkalischem Katalysator K2 bei einem Druck im Bereich von 1 bis 2,1 bar.

Besonders bevorzugt wird Schritt b) bei einem Druck im Bereich von 1 bis 3,1 bar (bevorzugt bei den oben genannten Drücken) und bei einer Temperatur von 120 bis 130°C durchgeführt.

Bevorzugt umfasst Schritt b) die Zugabe des mindestens einen Alkylenoxids Z zu einer Mischung aus Alkohol A2 und alkalischem Katalysator K2 über einen Zeitraum von kleiner oder gleich 36 h, bevorzugt kleiner oder gleich 32 h, besonders bevorzugt über einen Zeitraum von 2 bis 32 h, besonders bevorzugt von 11 bis 24 h, ganz besonders bevorzugt über einen Zeitraum von 5 bis 24 h, und bei einem Druck von kleiner oder gleich 3,1 bar (bevorzugt bei den oben genannten Drücken).

Das erfindungsgemäße Verfahren kann optional den Schritt c) umfassen, wobei mindestens ein Teil des alkoxylierten Alkohols A3 mit Ethylenoxid umgesetzt wird; wobei ein alkoxylierter Alkohol A4 erhalten wird, der dem Makromonomer M gemäß Formel (I) mit R⁴ = H und m größer 0 (bevorzugt 0,1 bis 15, besonders bevorzugt 0,1 bis 10, insbesondere bevorzugt 0,5 bis 5) entspricht. In einer bevorzugten Ausführungsform umfasst Schritt c) die Umsetzung des gesamten alkoxylierten Alkohols A3 mit Ethylenoxid.

In einer bevorzugten Ausführungsform der Erfindung umfasst das Verfahren Schritt c), wobei mindestens ein Teil des alkoxylierten Alkohols A3 (bevorzugt der gesamten alkoxylierte Alkohol A3) mit Ethylenoxid umgesetzt wird; wobei ein alkoxylierter Alkohol A4 erhalten wird, der dem Makromonomer M gemäß Formel (I) mit R⁴ = H und m ist eine Zahl von 0,1 bis 15, bevorzugt von 0,1 bis 10, besonders bevorzugt von 0,5 bis 10, insbesondere bevorzugt von 1 bis 7, weiterhin bevorzugt von 2 bis 5, entspricht.

Der optionale Schritt c) erfolgt insbesondere ohne weitere Zugabe eines alkalischen Katalysators. Der optionale Schritt c) wird insbesondere bei einem Druck im Bereich von 1 bis 7 bar, bevorzugt von 1 bis 5 bar, und einer Temperatur im Bereich von 60 bis 140°C, bevorzugt von 120 bis 140°C, besonders bevorzugt von 125 bis 135°C, durchgeführt. Die Ethoxylierung im optionalen Schritt c) erfolgt insbesondere über einen Zeitraum von 0,5 bis 7 h, insbesondere 0,5 bis 5 h, bevorzugt von 0,5 bis 4 h.

Der optionale Schritt c) erfolgt insbesondere ohne weitere Zugabe eines alkalischen Katalysators. Der optionale Schritt c) wird insbesondere bei einem Druck im Bereich von 1 bis 7 bar, bevorzugt von 1 bis 6 bar, und einer Temperatur im Bereich von 60 bis 140°C, bevorzugt von 120 bis 140 °C, besonders bevorzugt von 120 bis 135°C, durchgeführt. Die Ethoxylierung im optionalen Schritt c) erfolgt insbesondere über einen Zeitraum von 0,5 bis 7 h, insbesondere von 1 bis 5 h, bevorzugt von 1 bis 4 h.

Bevorzugt umfasst der optionale Schritt c) die Zugabe von Ethylenoxid zu der Reaktionsmischung nach Schritt b) enthaltend den alkoxylierten Alkohol A3 gemäß Formel (III) ohne weitere Aufarbeitung und/oder Druckentspannung. Nach Beendigung der Zugabe des Ethylenoxids lässt man das Reaktionsgemisch typischerweise nachreagieren. Die Zugabe und/oder Nachreaktion erfolgt typischerweise über einen Zeitraum von 0,5 bis 10 h, insbesondere 0,5 bis 7, insbesondere 0,5 bis 5 h, bevorzugt von 0,5 bis 4 h. Insbesondere erfolgt die Zugabe inklusive optionaler Entpannung sowie inklusive Nachreaktion typischerweise über einen Zeitraum von 0,5 bis 10 h, insbesondere von 2 bis 10 h, insbesondere bevorzugt von 4 bis 8 h.

Die Durchführung des optionalen Schritts c), d.h. einer abschließenden Ethoxylierung, kann bewirken, dass Alkylenoxid Z, das nach Schritt b) noch in der Reaktionsmischung vorhanden ist, abreagiert und entfernt wird.

Es ist weiterhin möglich, Alkylenoxid Z, das nach Schritt b) nicht abreagiert ist, durch eine Druckentspannung und/oder Temperaturerhöhung nach Schritt b) zu entfernen.

Das erfindungsgemäße Verfahren kann optional den Schritt d) umfassen, wobei der alkoxylierte Alkohol A3 und/oder A4 mit einer Verbindung R⁴-X verethert wird, wobei X eine Abgangsgruppe, bevorzugt ausgewählt aus Cl, Br, I, -O-SO₂-CH₃ (Mesylat), -O-SO₂-CF₃ (Triflat), und -O-SO₂-OR⁴ ist. Sofern der alkoxylierte Alkohol A3 der Formel (I) mit einer terminalen OH-Gruppe (d.h. R⁴ = H) verethert werden soll, kann dies mit dem Fachmann prinzipiell bekannten, üblichen Alkylierungsmitteln erfolgen, beispielsweise Alkylsulfaten und/oder Alkylhalogeniden. Typischerweise kann es sich bei der Verbindung R⁴-X um Alkylhalogenide handeln. Zur Veretherung kann auch insbesondere Dimethylsulfat oder Diethylsulfat eingesetzt werden. Das Verethern ist nur eine Option, welche vom Fachmann je nach den gewünschten Eigenschaften des Copolymers ausgewählt werden kann.

Bei den erfindungsgemäßen Makromonomeren M der Formel (I) ist eine ethylenische Gruppe H₂C=C(R¹)- über eine zweiwertige, verknüpfende Gruppe -R²-O- mit einem Polyalkylenoxyrest in Blockstruktur -(-CH₂-CH₂-O-)ₖ-(-CH₂-CH(R³)-O-)ₗ-R⁴ verbunden, wobei die beiden Blöcke -(-CH₂-CH₂-O-)ₖ und -(-CH₂-CH(R³)-O-)ₗ in der in Formel (I) dargestellten Reihenfolge angeordnet sind. Optional kann das Makromonomer M der Formel (I) einen weiteren Polyethylenoxyblock-(-CH₂-CH₂-O-)ₘ aufweisen. Der endständige Polyalkylenoxyrest -(-CH₂-CH(R³)-O-)ₗ oder -(-CH₂-CH₂-O-)ₘ weist entweder eine terminale OH-Gruppe oder eine terminale Ethergruppe -OR⁴ auf.

Für den Fachmann auf dem Gebiet der Polyalkylenoxide ist klar, dass die Orientierung der Kohlenwasserstoffreste R³ von den Bedingungen bei der Alkoxylierung abhängen kann, beispielsweise vom zur Alkoxylierung gewählten Katalysator. Die Alkylenoxygruppen können also sowohl in der Orientierung -(-CH₂-CH(R³)-O-) oder auch in inverser Orientierung -(-CH(R³)-CH₂-O-)- in das Monomer eingebaut werden. Die Darstellung in Formel (I) soll daher nicht als auf eine bestimmte Orientierung der Gruppe R³ beschränkt angesehen werden.

Bei der verknüpfenden Gruppe R² handelt es sich insbesondere um geradkettige oder verzweigte aliphatische acyclische Kohlenwasserstoffgruppen mit 1 bis 6 Kohlenstoffatomen, welche entweder direkt oder über eine Ethergruppe -O- mit der ethylenischen Gruppe H₂C=C(R¹)- verknüpft sind. Bevorzugt handelt es sich bei den Gruppen -(CₙH₂ₙ)-, und - (C_{n'}H_{2n'})- um lineare aliphatische Kohlenwasserstoffgruppen.

Bevorzugt handelt es sich bei der Gruppe R² = -(CₙH₂ₙ)- um eine Gruppe ausgewählt aus - CH₂-, -CH₂-CH₂- und -CH₂-CH₂-CH₂-, besonders bevorzugt ist eine Methylengruppe -CH₂-. Bevorzugt handelt es sich bei der Gruppe R² = -O-(C_{n'}H_{2n'})- um eine Gruppe ausgewählt aus -O-CH₂-CH₂-, -O-CH₂-CH₂-CH₂- und -O-CH₂-CH₂-CH₂-CH₂-, besonders bevorzugt ist -O-CH₂-CH₂-CH₂-CH₂-.
Weiterhin besonders bevorzugt handelt es sich bei R² um eine Gruppe ausgewählt aus -CH₂- oder -O-CH₂-CH₂-CH₂-CH₂-, ganz besonders bevorzugt ist -O-CH₂-CH₂-CH₂-CH₂-.

Die erfindungsgemäßen Makromonomere (M) weisen weiterhin einen Polyalkylenoxyrest auf, der aus den Einheiten (-CH₂-CH₂-O-)ₖ, (-CH₂-CH(R³)-O-)ₗ und optional -(-CH₂-CH₂-O-)ₘ besteht, wobei die Einheiten in Blockstruktur in der in Formel (I) dargestellten Reihenfolge angeordnet sind. Der Übergang zwischen den Blöcken kann abrupt oder auch kontinuierlich erfolgen.

Bei dem Block -(-CH₂-CH₂-O-)ₖ handelt es sich um einen Polyethylenoxyrest.

Bei der Anzahl der Alkylenoxy-Einheiten k handelt es sich um eine Zahl von 10 bis 150, bevorzugt 12 bis 100, besonders bevorzugt 15 bis 80, ganz besonders bevorzugt 23 bis 26 und beispielsweise ca. 24,5. Für den Fachmann auf dem Gebiet der Polyalkylenoxide ist klar, dass es sich bei den genannten Zahlen um Mittelwerte von Verteilungen handelt.

Beim dem zweiten, terminalen Block -(-CH₂-CH(R³)-O-)ₗ- stehen die Reste R³ unabhängig voneinander für Kohlenwasserstoffstoffreste mit mindestens 2 Kohlenstoffatomen, bevorzugt 2 bis 14 Kohlenstoffatomen, bevorzugt mit 2 bis 4, und besonders bevorzugt mit 2 oder 3 Kohlenstoffatomen. Es kann sich hierbei um einen aliphatischen und/oder aromatischen, linearen oder verzweigten Kohlenwasserstoffrest handeln. Bevorzugt handelt es sich um aliphatische Reste. Beispiele geeigneter Reste R³ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl und n-Pentyl. Besonders bevorzugt ist R³ Ethyl und/oder n-Propyl.

Beispiele geeigneter Reste R³ umfassen Ethyl, n-Propyl, n-Butyl, n-Pentyl, n-Hexyl, n-Heptyl, n-Octyl, n-Nonyl, n-Decyl, n-Dodecyl, n-Tetradecyl sowie Phenyl.

Um eine ausgewählte Hydrophobie der Makromonomere zu gewährleisten hat es sich herausgestellt, dass eine bestimmt Summe der Kohlenstoffatomen in den Resten R³ oder R^{3'} vorteilhaft ist. Für den Fall, dass R³ eine Ethergruppe -CH₂-O-R^{3'} darstellt, ist unter der Summe der Kohlenstoffatome die Summe der Kohlenstoffatome in allen Kohlenwasserstoffresten R^{3'} zu verstehen, wobei das Kohlenstoffatom der -CH₂- Gruppe in -CH₂-O-R^{3'} nicht berücksichtigt wird.

Bevorzugt liegt die Summen der Kohlenstoffatome in allen Kohlenwasserstoffresten R³ oder R^{3'} im Bereich von 15 bis 60, bevorzugt von 15 bis 56, besonders bevorzugt von 15 bis 50, insbesondere bevorzugt von 25,5 bis 50, weiterhin bevorzugt von 25,5 bis 34,5.

Bevorzugt liegt die Summen der Kohlenstoffatome in allen Kohlenwasserstoffresten R³ oder R^{3'} im Bereich von 25,5 bis 34,5.

Eine bevorzugte Ausführungsform betrifft ein oben beschriebenes Verfahren zur Herstellung eines Makromonomers M, wobei R³ Ethyl ist und I eine Zahl von 7,5 bis 30, bevorzugt von 7,5 bis 28, bevorzugt von 7,5 bis 25, besonders bevorzugt von 12,75 bis 25, insbesondere bevorzugt von 13 bis 23, insbesondere bevorzugt 12,75 bis 17,25, beispielsweise 14, 16 oder 22, ist.

Eine bevorzugte Ausführungsform betrifft ein oben beschriebenes Verfahren zur Herstellung eines Makromonomers M, wobei R³ Ethyl ist und l eine Zahl von 12,75 bis 17,25, insbesondere 13 bis 17, beispielsweise 14 oder 16, ist.

Eine weitere bevorzugte Ausführungsform betrifft ein oben beschriebenes Verfahren zur Herstellung eines Makromonomers M, wobei R³ n-Propyl ist und I eine Zahl von 8,5 bis 11,5, bevorzugt 9 bis 11, beispielsweise 10 oder 11, ist.

Bei den Resten R³ kann es sich weiterhin um Ethergruppen der allgemeinen Formel -CH₂-O-R^{3'} handeln, wobei es sich bei R^{3'} um einen aliphatischen und/oder aromatischen, linearen oder verzweigten Kohlenwasserstoffrest mit mindestens 2 Kohlenstoffatomen, bevorzugt 2 bis 10 Kohlenstoffatomen, bevorzugt mindestens 3, handelt. Beispiele für Reste R^{3'} umfassen n-Propyl, n-Butyl, n-Pentyl, n-Hexyl, 2-Ethylhexyl, n-Heptyl, n-Octyl, n-Nonyl, n-Decyl oder Phenyl. Beispiele geeigneter Reste R^{3'} umfassen n-Propyl, n-Butyl, n-Pentyl, n-Hexyl, n-Heptyl, n-Octyl, n-Nonyl, n-Decyl, n-Dodecyl, n-Tetradecyl sowie Phenyl.

Bei dem Block -(-CH₂-CH(R³)-O-)ₗ- handelt es sich also um einen Block, der aus Alkylenoxyeinheiten mit mindestens 4 Kohlenstoffatomen, bevorzugt mindestens 5 Kohlenstoffatomen und/oder Glycidylethern mit einer Ethergruppe von mindestens 2, bevorzugt mindestens 3 Kohlenstoffatomen besteht. Bei den Bausteinen des zweiten terminalen Blocks handelt es sich besonders bevorzugt um mindestens 4 und/oder 5 Kohlenstoffatome umfassende Alkylenoxyeinheiten, wie Butylenoxyeinheiten und/oder Pentylenoxyeinheiten oder Einheiten höherer Alkylenoxide.

Bei der Anzahl der Alkylenoxyeinheiten I handelt es sich um eine Zahl von 5 bis 25, bevorzugt 6 bis 20, besonders bevorzugt 8 bis 18, ganz besonders bevorzugt 8,5 bis 17,25. Für den Fachmann auf dem Gebiet der Polyalkylenoxide ist klar, dass es sich bei den genannten Zahlen um Mittelwerte von Verteilungen handelt.

In einer weiteren Ausführungsform betrifft die Erfindung das oben beschriebene Verfahren, wobei es sich bei der Anzahl der Alkylenoxyeinheiten I um eine Zahl von 5 bis 30, bevorzugt von 5 bis 28, bevorzugt von 5 bis 25, bevorzugt von 7 bis 23, besonders bevorzugt von 7 bis 18, insbesondere bevorzugt von 8,5 bis 17,25, handelt. Für den Fachmann auf dem Gebiet der Polyalkylenoxide ist klar, dass es sich bei den genannten Zahlen um Mittelwerte von Verteilungen handelt.

Besonders bevorzugt ist ein Makromonomer M gemäß Formel (I) und ein Verfahren zu dessen Herstellung, wobei k eine Zahl von 23 bis 26 und I eine Zahl von 5 bis 30, bevorzugt von 5 bis 28, bevorzugt von 5 bis 25, bevorzugt von 7 bis 23, besonders bevorzugt von 7 bis 18, insbesondere bevorzugt von 8,5 bis 17,25 ist, unter der Maßgabe, dass die Summe der Kohlenstoffatome in allen Kohlenwasserstoffresten R³ oder R³ im Bereich von 15 bis 60, bevorzugt von 15 bis 56, insbesondere von 15 bis 50, bevorzugt von 25,5 bis 34,5 liegt.

Besonders bevorzugt ist ein Makromonomer M gemäß Formel (I) und ein Verfahren zu dessen Herstellung, wobei k eine Zahl von 23 bis 26 und l eine Zahl von 8,5 bis 17,25 ist, unter der Maßgabe, dass die Summe der Kohlenstoffatome in allen Kohlenwasserstoffresten R³ oder R^{3'} im Bereich von 25,5 bis 34,5 liegt.

Bei dem optionalen Block -(-CH₂-CH₂-O-)ₘ handelt es sich um einen Polyethylenoxyrest. Bei der Anzahl der Alkylenoxy-Einheiten m handelt es sich um eine Zahl von 0 bis 15, bevorzugt von 0 bis 10, besonders bevorzugt von 0,1 bis 15, besonders bevorzugt von 0,1 bis 10, insbesondere bevorzugt von 0,5 bis 5, weiterhin bevorzugt von 0,5 bis 2,5.

In einer bevorzugten Ausführungsform der Erfindung ist m=0 (d.h. der optionale Schritt c) wird nicht ausgeführt). Für den Fachmann auf dem Gebiet der Polyalkylenoxide ist klar, dass es sich bei den genannten Zahlen um Mittelwerte von Verteilungen handelt.

In einer bevorzugten Ausführungsform der Erfindung ist m größer 0 (d.h. der optionale Schritt c) wird ausgeführt). Insbesondere ist in dieser Ausführungsform m eine Zahl von 0,1 bis 15, bevorzugt von 0,1 bis 10, besonders bevorzugt von 0,5 bis 10, insbesondere bevorzugt von 1 bis 7, weiterhin bevorzugt von 2 bis 5. Für den Fachmann auf dem Gebiet der Polyalkylenoxide ist klar, dass es sich bei den genannten Zahlen um Mittelwerte von Verteilungen handelt.

Insbesondere betrifft die vorliegende Anmeldung ein Verfahren zur Herstellung eines Makromonomers M der allgemeinen Formel (I)

H₂C=C(R¹)-R²-O-(-CH₂-CH₂-O-)ₖ-(-CH₂-CH(R³)-O-)ₗ-(-CH₂-CH₂-O-)ₘ-R⁴ (I)

wie oben beschrieben, wobei das Makromonomer M eine Mischung darstellt aus einem Makromonomer M der Formel (I) mit m = 0 und einem Makromonomer M der Formel (I) mit m = 1 bis 15, bevorzugt 1 bis 10.

Bevorzugt liegt das Gewichtsverhältnis des Makromonomers M der Formel (I) mit m = 0 und des Makromonomers M der Formel (I) mit m = 1 bis 15 im Bereich von 19 : 1 bis 1 : 19, bevorzugt im Bereich von 9 : 1 bis 1 : 9.

Bevorzugt ergibt sich für diese Mischungen aus Makromonomer M der Formel (I) mit m = 0 und Makromonomer M der Formel (I) mit m = 1 bis 15 ein mittlerer Wert (gemittelt über alle Makromonomere in der Mischung) im Bereich von m = 0,1 bis 15, bevorzugt 0,1 bis 10, besonders bevorzugt 0,5 bis 5, besonders bevorzugt 0,5 bis 3, ganz besonders bevorzugt von 0,5 bis 2,5.

In der Regel wird eine Ethoxylierung des alkoxylierten Alkohols A3 in Schritt c) bevorzugt an bereits ethoxylierten Ketten erfolgen, da die primäre Alkoholatgruppe aktiver ist im Vergleich zu der sekundären Alkoholatgruppe des Alkohols A3. Es kann also insbesondere nach Schritt c) eine Mischung aus Ketten vorliegen, die einen endständigen mindestens eine Einheit umfassenden Ethylenoxyblock -(-CH₂-CH₂-O-)ₘ aufweisen (Makromonomere der Formel (I)), und Ketten, die keinen endständige Ethyenoxyblock -(-CH₂-CH₂-O-)ₘ aufweisen (Makromonomere der Formel (III)).

Bei dem Rest R⁴ handelt es sich um H oder einen bevorzugt aliphatischen Kohlenwasserstoffrest mit 1 bis 30 Kohlenstoffatomen, bevorzugt 1 bis 10 und besonders bevorzugt 1 bis 5 Kohlenstoffatomen. Bevorzugt handelt es sich bei R⁴ um H, Methyl oder Ethyl, besonders bevorzugt um H oder Methyl und ganz besonders bevorzugt um H.

Für den Fachmann auf dem Gebiet der Polyalkylenoxy-Blockcopolymere ist klar, dass der Übergang zwischen den Blöcken je nach der Art der Herstellung abrupt oder auch kontinuierlich erfolgen kann. Bei einem kontinuierlichen Übergang befindet sich zwischen den Blöcken noch eine Übergangszone, welche Monomere beider Blöcke umfasst. Wenn man die Blockgrenze auf die Mitte der Übergangszone festlegt, kann entsprechend der erste Block -(-CH₂-CH₂-O-)ₖ noch geringe Mengen an Einheiten -CH₂-CH(R³)-O- und der zweite Block -(-CH₂-CH(R³)-O-)ₗ- geringe Mengen an Einheiten -CH₂-CH₂-O- aufweisen, wobei diese Einheiten aber nicht statistisch über den Block verteilt sind, sondern in der genannten Übergangszone angeordnet sind. Insbesondere kann der optionale dritte Block (-CH₂-CH₂-O-)ₘ geringe Mengen an Einheiten -(-CH₂-CH(R³)-O-)- aufweisen.

Die vorliegende Erfindung betrifft ein Verfahren zur Herstellung eines Makromonomers M gemäß Formel (I), wobei die Einheiten (-CH₂-CH₂-O-)ₖ und (-CH₂-CH(R³)-O-)ₗ und optional -(-CH₂-CH₂-O-)ₘ in Blockstruktur in der in Formel (I) dargestellten Reihenfolge angeordnet. Blockstruktur im Sinne der vorliegenden Erfindung bedeutet, dass die Blöcke zu mindestens 85 mol-%, bevorzugt zu mindestens 90 mol-%, besonders bevorzugt zu mindestens 95 mol-%, bezogen auf die Gesamtstoffmenge der jeweiligen Blöcke, aus den entsprechenden Einheiten aufgebaut sind. Dies bedeutet, dass die Blöcke neben den entsprechenden Einheiten geringe Mengen an anderen Einheiten (insbesondere andere Polyalkylenoxyeinheiten) aufweisen können. Insbesondere enthält der optionale Polyethylenoxyblock -(-CH₂-CH₂-O-)ₘ mindestens 85 mol-%, bevorzugt mindestens 90 mol-%, bezogen auf die Gesamtstoffmenge des Polyethylenoxy-Blocks-(-CH₂-CH₂-O-)ₘ die Einheit (-CH₂-CH₂-O-). Insbesondere besteht der optionale Polyethylenoxyblock -(-CH₂-CH₂-O-)ₘ aus 85 bis 95 mol-% der Einheit (-CH₂-CH₂-O-) und aus 5 bis 15 mol-% der Einheit (-CH₂-CH(R³)-O-).

Bevorzugt haben die Reste und Indices die folgenden Bedeutungen:
- R²:: ist unabhängig voneinander eine zweiwertige, verknüpfende Gruppe -O-(C_{n'}H_{2n'})-, wobei n' für eine natürliche Zahl von 2 bis 6 steht;
- R³:: ist unabhängig voneinander ein Kohlenwasserstoffrest mit 2 bis 4 Kohlenstoffatomen
- R⁴:: ist H.

Insbesondere bevorzugt haben die Reste und Indices die folgenden Bedeutungen:
- k:: ist eine Zahl von 20 bis 28;
- l:: ist eine Zahl von 5 bis 30, bevorzugt von 5 bis 28, bevorzugt von 5 bis 25;
- m:: ist eine Zahl von 0 bis 15, bevorzugt 0 oder bevorzugt von 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ oder R^{3'} im Bereich von 15 bis 60, bevorzugt 15 bis 56, bevorzugt von 15 bis 50 liegt;
- R⁴:: ist H.

Insbesondere bevorzugt haben die Reste und Indices die folgenden Bedeutungen:
- k:: ist eine Zahl von 23 bis 26;
- l:: ist eine Zahl von 5 bis 30, bevorzugt von 5 bis 28, bevorzugt von 5 bis 25;
- m:: ist eine Zahl von 0 bis 15, bevorzugt 0 oder bevorzugt von 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ oder R^{3'} im Bereich von 15 bis 60, bevorzugt 15 bis 56, bevorzugt von 15 bis 50 liegt;
- R⁴:: ist H.

Insbesondere bevorzugt haben die Reste und Indices die folgenden Bedeutungen:
- k:: ist eine Zahl von 23 bis 26;
- l:: ist eine Zahl von 5 bis 30, bevorzugt von 5 bis 28, bevorzugt von 5 bis 25;
- m:: ist eine Zahl von 0,1 bis 10, bevorzugt von 0,5 bis 10, besonders bevorzugt von 2 bis 5;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ oder R^{3'} im Bereich von 15 bis 60, bevorzugt 15 bis 56, bevorzugt von 15 bis 50 liegt;
- R⁴:: ist H.

Insbesondere bevorzugt haben die Reste und Indices die folgenden Bedeutungen:
- k:: ist eine Zahl von 23 bis 26;
- l:: ist eine Zahl von 8,5 bis 17,25;
- m:: ist eine Zahl von 0 bis 15, bevorzugt 0 oder bevorzugt von 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ oder R^{3'} im Bereich von 25,5 bis 34,5 liegt;
- R⁴:: ist H.

In einer bevorzugten Ausführungsform betrifft die vorliegende Erfindung ein oben beschriebenes Verfahren zur Herstellung eines Makromonomers M der Formel (I), dadurch gekennzeichnet, dass die Reste und Indices die folgenden Bedeutungen haben:
- k:: ist eine Zahl von 20 bis 28;
- l:: ist eine Zahl von 7,5 bis 30, bevorzugt von 7,5 bis 28, bevorzugt von 7,5 bis 25, besonders bevorzugt von 12,75 bis 25, insbesondere bevorzugt von 13 bis 23, beispielsweise 14, 16 oder 22;
- m:: ist eine Zahl von 0 bis 15; bevorzugt 0 oder bevorzugt von 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist Ethyl;
- R⁴:: ist H.

In einer bevorzugten Ausführungsform betrifft die vorliegende Erfindung ein oben beschriebenes Verfahren zur Herstellung eines Makromonomers M der Formel (I), dadurch gekennzeichnet, dass die Reste und Indices die folgenden Bedeutungen haben:
- k:: ist eine Zahl von 23 bis 26;
- l:: ist eine Zahl von 7,5 bis 30, bevorzugt von 7,5 bis 28, bevorzugt von 7,5 bis 25, besonders bevorzugt von 12,75 bis 25, insbesondere bevorzugt von 13 bis 23, beispielsweise 14, 16 oder 22;
- m:: ist eine Zahl von 0 bis 15; bevorzugt 0 oder bevorzugt von 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist Ethyl;
- R⁴:: ist H.

In einer bevorzugten Ausführungsform betrifft die vorliegende Erfindung ein oben beschriebenes Verfahren zur Herstellung eines Makromonomers M der Formel (I), dadurch gekennzeichnet, dass die Reste und Indices die folgenden Bedeutungen haben:
- k:: ist eine Zahl von 23 bis 26;
- l:: ist eine Zahl von 7,5 bis 30, bevorzugt 7,5 bis 28, bevorzugt von 7,5 bis 25, besonders bevorzugt von 12,75 bis 25, insbesondere bevorzugt 13 bis 23, beispielsweise 14, 16 oder 22;
- m:: ist eine Zahl von 0,1 bis 10, bevorzugt von 0,5 bis 10, besonders bevorzugt von 2 bis 5;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist Ethyl;
- R⁴:: ist H.

In einer bevorzugten Ausführungsform betrifft die vorliegende Erfindung ein oben beschriebenes Verfahren zur Herstellung eines Makromonomers M der Formel (I), dadurch gekennzeichnet, dass die Reste und Indices die folgenden Bedeutungen haben:
- k:: ist eine Zahl von 23 bis 26;
- l:: ist eine Zahl von 12,75 bis 17,25, insbesondere von 13 bis 17, beispielsweise 14 oder 16;
- m:: ist eine Zahl von 0 bis 15; bevorzugt 0 oder bevorzugt von 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist Ethyl;
- R⁴:: ist H.

In einer weiteren bevorzugten Ausführungsform betrifft die vorliegende Erfindung ein oben beschriebenes Verfahren zur Herstellung eines Makromonomers M der Formel (I), dadurch gekennzeichnet, dass die Reste und Indices die folgenden Bedeutungen haben:
- k:: ist eine Zahl von 23 bis 26;
- l:: ist eine Zahl von 8,5 bis 11,5, bevorzugt von 9 bis 11, beispielsweise 10 oder 11;
- m:: ist eine Zahl von 0 bis 15, bevorzugt von 0 bis 10; bevorzugt 0 oder bevorzugt von 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist n-Propyl;
- R⁴:: ist H.

Die vorliegende Erfindung betrifft zudem die mit dem erfindungsgemäßen Verfahren hergestellten hydrophob assoziierenden Makromonomere und die aus den Makromonomeren hergestellten hydrophob assoziierenden Copolymere.

Unter hydrophob assoziierenden Makromonomeren bzw. Copolymeren im Sinne der Erfindung handelt es sich um wasserlösliche Makromonomere bzw. Copolymere, welche seiten- oder end-ständige hydrophobe Gruppen aufweisen. In wässriger Lösung können die hydrophoben Gruppen mit sich selbst oder mit anderen hydrophobe Gruppen aufweisenden Stoffen assoziieren und verdicken durch diese Wechselwirkung das wässrige Medium.

Dem Fachmann ist bekannt, dass die Löslichkeit hydrophob assoziierender Makromonomere bzw. Copolymere in Wasser je nach der Art der verwendeten Monomere mehr oder weniger stark vom pH-Wert abhängig sein kann. Bezugspunkt für die Beurteilung der Wasserlöslichkeit soll daher jeweils der für den jeweiligen Einsatzzweck des Copolymers gewünschte pH-Wert sein. Ein Copolymer, welches bei einem bestimmten pH-Wert eine nicht ausreichende Löslichkeit für den vorgesehenen Einsatzzweck hat, kann bei einem anderen pH-Wert eine ausreichende Löslichkeit aufweisen. Der Begriff "wasserlöslich" umfasst insbesondere auch alkalilösliche Dispersionen von Polymeren, d.h. Polymere, welche im sauren pH-Bereich als Dispersionen vorliegen und sich erst im alkalischen pH-Bereich in Wasser lösen und ihre verdickende Wirkung entfalten.

Im Idealfall sollten die erfindungsgemäßen Copolymere in beliebigem Verhältnis mit Wasser mischbar sein. Erfindungsgemäß ist es aber ausreichend, wenn die Copolymere zumindest bei der gewünschten Einsatzkonzentration und beim gewünschten pH wasserlöslich sind. Im Regelfall sollte die Löslichkeit in Wasser bei Raumtemperatur mindestens 20 g/l, bevorzugt mindestens 50 g/l und besonders bevorzugt mindestens 100 g/l betragen.

Die vorliegende Erfindung betrifft ein Makromonomer M der allgemeinen Formel (I)

H₂C=C(R¹)-R²-O-(-CH₂-CH₂-O-)ₖ-(-CH₂-CH(R³)-O-)ₗ-(-CH₂-CH₂-O-)ₘ-R⁴ (I),

wobei die Einheiten (-CH₂-CH₂-O-)ₖ und (-CH₂-CH(R³)-O-)ₗ und optional -(-CH₂-CH₂-O-)ₘ in Blockstruktur in der in Formel (I) dargestellten Reihenfolge angeordnet sind;

wobei die Reste und Indices die folgenden Bedeutungen haben:
- k:: ist eine Zahl von 10 bis 150, bevorzugt von bis 10 bis 50, besonders bevorzugt von 15 bis 35, ganz besonders bevorzugt von 23 bis 26;
- l:: ist eine Zahl von 5 bis 25, bevorzugt von 7 bis 18, insbesondere bevorzugt von 8,5 bis 17,25;
- m:: ist eine Zahl von 0 bis 15, bevorzugt 0 bis 10, insbesondere bevorzugt von 0,1 bis 10, besonders bevorzugt von 0,5 bis 5, insbesondere bevorzugt 0,5 bis 2,5;
- R¹:: ist H oder Methyl;
- R²:: ist unabhängig voneinander eine Einfachbindung oder eine zweiwertige, verknüpfende Gruppe, ausgewählt aus der Gruppe bestehend aus -(CₙH₂ₙ)- und -O-(C_{n'}H_{2n'})-, wobei n für eine natürliche Zahl von 1 bis 6 steht und n' für eine natürliche Zahl von 2 bis 6 steht;
- R³:: ist unabhängig voneinander ein Kohlenwasserstoffrest mit mindestens 2 Kohlenstoffatomen, bevorzugt mit 2 bis 10, insbesondere bevorzugt mit 2 bis 4 Kohlenstoffatomen, oder eine Ethergruppe der allgemeinen Formel -CH₂-O-R^{3'}, wobei R^{3'} für einen Kohlenwasserstoffrest mit mindestens 2 Kohlenstoffatomen steht;
- R⁴:: ist unabhängig voneinander H oder ein Kohlenwasserstoffrest mit 1 bis 4 Kohlenstoffatomen;
erhältlich durch ein oben beschriebenes erfindungsgemäßes Verfahren.

In einer weiteren Ausführungsform betrifft die Erfindung das oben beschriebene Makromonomer M der allgemeinen Formel (I) erhältlich durch ein oben beschriebenes erfindungsgemäßes Verfahren, mit
- l:: ist eine Zahl von 5 bis 30, bevorzugt von 5 bis 28, bevorzugt von 5 bis 25, bevorzugt von 7 bis 23, besonders bevorzugt von 7 bis 18, insbesondere bevorzugt von 8,5 bis 17,25.

In einer weiteren Ausführungsform betrifft die Erfindung das oben beschriebene Makromonomer M der allgemeinen Formel (I) erhältlich durch ein oben beschriebenes erfindungsgemäßes Verfahren, wobei k eine Zahl von 10 bis 150, bevorzugt von 10 bis 50, besonders bevorzugt von 15 bis 35, insbesondere bevorzugt von 20 bis 28, ganz besonders bevorzugt von 23 bis 26 ist.

In einer weiteren Ausführungsform betrifft die Erfindung das oben beschriebene Makromonomer M der allgemeinen Formel (I) erhältlich durch ein oben beschriebenes erfindungsgemäßes Verfahren mit
- m:: ist eine Zahl von 0 bis 15, bevorzugt 0 bis 10, insbesondere bevorzugt von 0,1 bis 10, besonders bevorzugt von 0,5 bis 5, insbesondere bevorzugt 0,5 bis 3,5, insbesondere bevorzugt von 0,5 bis 2,5.

Es wurde zudem gefunden, dass sich insbesondere Makromonomere mit einem speziellen Verhältnis an Ethylenoxid (EO) und Pentylenoxid (PeO) und/oder Butylenoxid (BuO)-Blöcken besonders vorteilhaft mittels des erfindungsgemäßen Verfahrens herstellen lassen.

Die vorliegende Erfindung betrifft insbesondere ein oben genanntes Makromonomer M erhältlich durch das erfindungsgemäße Verfahren, wobei die Reste und Indices der Formel (I) die folgenden Bedeutungen haben:
- k:: ist eine Zahl von 20 bis 28;
- l:: ist eine Zahl von 5 bis 30, bevorzugt von 5 bis 28, bevorzugt von 5 bis 25;
- m:: ist eine Zahl von 0 bis 15, bevorzugt 0 oder bevorzugt von 0,5 bis 10;
- R¹:: ist H oder Methyl;
- R²:: ist unabhängig voneinander eine Einfachbindung oder eine zweiwertige, verknüpfende Gruppe, ausgewählt aus der Gruppe bestehend aus -(CₙH₂ₙ)- und -O-(C_{n'}H_{2n'})-, wobei n für eine natürliche Zahl von 1 bis 6 steht und n' für eine natürliche Zahl von 2 bis 6 steht;
- R³:: ist unabhängig voneinander ein Kohlenwasserstoffrest mit mindestens 2 Kohlenstoffatomen, bevorzugt mit 2 bis 4 Kohlenwasserstoffatomen, unter der Maßgabe, dass die Summe der Kohlenstoffatome in allen Kohlenwasserstoffresten R³ im Bereich von 15 bis 60, bevorzugt von 15 bis 56, bevorzugt von 15 bis 50 liegt;
- R⁴:: ist unabhängig voneinander H oder ein Kohlenwasserstoffrest mit 1 bis 4 Kohlenstoffatomen.

Die vorliegende Erfindung betrifft insbesondere ein oben genanntes Makromonomer M erhältlich durch das erfindungsgemäße Verfahren, wobei die Reste und Indices der Formel (I) die folgenden Bedeutungen haben:
- k:: ist eine Zahl von 23 bis 26;
- l:: ist eine Zahl von 5 bis 30, bevorzugt von 5 bis 28, bevorzugt von 5 bis 25;
- m:: ist eine Zahl von 0 bis 15, bevorzugt 0 oder bevorzugt von 0,5 bis 10;
- R¹:: ist H oder Methyl;
- R²:: ist unabhängig voneinander eine Einfachbindung oder eine zweiwertige, verknüpfende Gruppe, ausgewählt aus der Gruppe bestehend aus -(CₙH₂ₙ)- und -O-(C_{n'}H_{2n'})-, wobei n für eine natürliche Zahl von 1 bis 6 steht und n' für eine natürliche Zahl von 2 bis 6 steht;
- R³:: ist unabhängig voneinander ein Kohlenwasserstoffrest mit mindestens 2 Kohlenstoffatomen, bevorzugt mit 2 bis 4 Kohlenwasserstoffatomen, unter der Maßgabe, dass die Summe der Kohlenstoffatome in allen Kohlenwasserstoffresten R³ im Bereich von 15 bis 60, bevorzugt von 15 bis 56, bevorzugt von 15 bis 50 liegt;
- R⁴:: ist unabhängig voneinander H oder ein Kohlenwasserstoffrest mit 1 bis 4 Kohlenstoffatomen.

Die vorliegende Erfindung betrifft insbesondere ein oben genanntes Makromonomer M erhältlich durch das erfindungsgemäße Verfahren, wobei die Reste und Indices der Formel (I) die folgenden Bedeutungen haben:
- k:: ist eine Zahl von 23 bis 26;
- l:: ist eine Zahl von 8,5 bis 17,25;
- m:: ist eine Zahl von 0 bis 15, bevorzugt 0 oder bevorzugt 0,5 bis 10;
- R¹:: ist H oder Methyl;
- R²:: ist unabhängig voneinander eine Einfachbindung oder eine zweiwertige, verknüpfende Gruppe, ausgewählt aus der Gruppe bestehend aus -(CₙH₂ₙ)- und -O-(C_{n'}H_{2n'})-, wobei n für eine natürliche Zahl von 1 bis 6 steht und n' für eine natürliche Zahl von 2 bis 6 steht;
- R³:: ist unabhängig voneinander ein Kohlenwasserstoffrest mit mindestens 2 Kohlenstoffatomen, bevorzugt mit 2 bis 4 Kohlenwasserstoffatomen, unter der Maßgabe, dass die Summe der Kohlenstoffatome in allen Kohlenwasserstoffresten R³ im Bereich von 25,5 bis 34,5 liegt;
- R⁴:: ist unabhängig voneinander H oder ein Kohlenwasserstoffrest mit 1 bis 4 Kohlenstoffatomen.

Die vorliegende Erfindung betrifft insbesondere ein oben genanntes Makromonomer M erhältlich durch das erfindungsgemäße Verfahren, wobei die Reste und Indices der Formel (I) die folgenden Bedeutungen haben:
- k:: ist eine Zahl von 20 bis 28;
- l:: ist eine Zahl von 5 bis 30, bevorzugt von 5 bis 28, bevorzugt von 5 bis 25;
- m:: ist eine Zahl von 0 bis 15, bevorzugt 0 oder bevorzugt von 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ im Bereich von 15 bis 60, bevorzugt von 15 bis 56, bevorzugt von 15 bis 50 liegt;
- R⁴:: ist H.

Die vorliegende Erfindung betrifft insbesondere ein oben genanntes Makromonomer M erhältlich durch das erfindungsgemäße Verfahren, wobei die Reste und Indices der Formel (I) die folgenden Bedeutungen haben:
- k:: ist eine Zahl von 23 bis 26;
- l:: ist eine Zahl von 5 bis 30, bevorzugt von 5 bis 28, bevorzugt von 5 bis 25;
- m:: ist eine Zahl von 0 bis 15, bevorzugt 0 oder bevorzugt von 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ im Bereich von 15 bis 60, bevorzugt 15 bis 56, bevorzugt von 15 bis 50 liegt;
- R⁴:: ist H.

Die vorliegende Erfindung betrifft insbesondere ein oben genanntes Makromonomer M erhältlich durch das erfindungsgemäße Verfahren, wobei die Reste und Indices der Formel (I) die folgenden Bedeutungen haben:
- k:: ist eine Zahl von 23 bis 26;
- l:: ist eine Zahl von 8,5 bis 17,25;
- m:: ist eine Zahl von 0 bis 15, bevorzugt 0 oder bevorzugt 0,5 bis 10;
- R¹:: ist H;
- R²:: ist unabhängig voneinander eine zweiwertige, verknüpfende Gruppe -O-(C_{n'}H_{2n'})-, wobei n' für eine natürliche Zahl von 3 bis 5 steht,
- R³:: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ im Bereich von 25,5 bis 34,5 liegt;
- R⁴:: ist H.

Weiterhin gelten die oben im Zusammenhang mit dem erfindungsgemäßen Verfahren beschriebenen bevorzugten Ausführungsformen und Definitionen für das Makromonomer M erhältlich durch das erfindungsgemäße Verfahren.

In einem weiteren Aspekt betrifft die vorliegende Erfindung bevorzugt die Makromonomere M, wie in den vorliegenden Ansprüchen 18 und 19 beschrieben. Weiterhin gelten die oben im Zusammenhang mit dem erfindungsgemäßen Verfahren beschriebenen bevorzugten Ausführungsformen und Definitionen für das Makromonomer M. Die erfindungsgemäßen Makromonomere M können mit weiteren monoethylenisch ungesättigten, hydrophilen Monomeren (b) zu Copolymeren umgesetzt werden. Diese wasserlöslichen, hydrophob assoziierenden Copolymere umfassen typischerweise die folgenden Monomere:
(a) 0,1 bis 20 Gew.-%, bevorzugt 0,5 bis 12 Gew.-%, mindestens eines erfindungsgemäßen Makromonomers M, sowie
(b) 25 Gew.-% bis 99,9 Gew.-% mindestens eines davon verschiedenen, monoethylenisch ungesättigten, hydrophilen Monomers (b),
wobei die Mengenangaben jeweils auf die Gesamtmenge aller Monomere im Copolymer bezogen sind.

Die hydrophilen Monomere (b) umfassen neben einer ethylenischen Gruppe eine oder mehrere hydrophile Gruppen. Diese verleihen dem erfindungsgemäßen Copolymer aufgrund ihrer Hydrophilie eine ausreichende Wasserlöslichkeit. Bei den hydrophilen Gruppen handelt es sich insbesondere um funktionelle Gruppen, welche O- und/oder N-Atome umfassen. Sie können darüber hinaus als Heteroatome insbesondere S- und/oder P-Atome umfassen.

Besonders bevorzugt sind die Monomere (b) in beliebigem Verhältnis mit Wasser mischbar, zur Ausführung der Erfindung ist es jedoch ausreichend, dass das erfindungsgemäße, hydrophob assoziierende Copolymer die eingangs erwähnte Wasserlöslichkeit besitzt. Im Regelfalle sollte die Löslichkeit der Monomere (b) in Wasser bei Raumtemperatur mindestens 100 g/l, bevorzugt mindestens 200 g/l und besonders bevorzugt mindestens 500 g/l betragen.

Bevorzugt weisen die hydrophilen Monomere (b) funktionelle Gruppen auf ausgewählt aus der Gruppe bestehend aus Carbonylgruppen >C=O, Ethergruppen -O-, insbesondere Polyethylenoxidgruppen -(CH₂-CH₂-O-)ₙ-, wobei n bevorzugt für eine Zahl von 1 bis 200 steht, Hydroxy-gruppen -OH, primäre, sekundäre oder tertiäre Aminogruppen, Ammoniumgruppen, Amidgruppen -C(O)-NH-, Carboxamidgruppen -C(O)-NH₂ oder saure Gruppen wie Carboxylgruppen -COOH, Sulfonsäuregruppen -SO₃H, Phosphonsäuregruppen -PO₃H₂ oder Phosphorsäuregruppen -OP(OH)₃. Beispiele bevorzugter funktioneller Gruppen umfassen Hydroxygruppen -OH, Carboxylgruppen - COOH, Sulfonsäuregruppen -SO₃H, Carboxamidgruppen -C(O)-NH₂, Amidgruppen -C(O)-NH- sowie Polyethylenoxidgruppen -(CH₂-CH₂-O-)ₙ-H, wobei n bevorzugt für eine Zahl von 1 bis 200 steht.

Die funktionellen Gruppen können direkt an die ethylenische Gruppe angebunden sein, oder aber über eine oder mehrere verknüpfende Kohlenwasserstoffgruppen mit der ethylenischen Gruppe verbunden sein.

Bei den hydrophilen Monomeren (b) handelt es sich bevorzugt um Monomere der allgemeinen Formel (IV)

H₂C=C(R⁵)R⁶ (IV),

wobei R⁵ für H oder Methyl und R⁶ für eine oder mehrere der oben genannten hydrophilen Gruppe(n) steht.

Bevorzugt kann das mindestens eine Monomer (b) ausgewählt werden aus der Gruppe bestehend aus Acrylsäure, Methacrylsäure, Crotonsäure, Itaconsäure, Maleinsäure, Fumarsäure, Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure, 2-Acrylamido-2,4,4-trimethylpentansulfonsäure, Vinylphosphonsäure, Allylphosphonsäure, N-(Meth)acrylamidoalkylphosphonsäuren und (Meth)acryloyloxyalkylphosphonsäuren.

Bevorzugt handelt es sich bei mindestens einem der Monomere (b) um ein Monomer ausgewählt aus der Gruppe von (Meth)acrylsäure, Vinylsulfonsäure, Allylsulfonsäure oder 2-Acrylamido-2-methylpropansulfonsäure (AMPS), besonders bevorzugt um Acrylsäure und/oder APMS bzw. deren Salze.

Bevorzugt handelt es sich bei mindestens einem der Monomere (b) um ein Monomer ausgewählt aus der Gruppe von (Meth)acrylsäure, Vinylsulfonsäure, Allylsulfonsäure oder 2-Acrylamido-2-methylpropansulfonsäure (AMPS), besonders bevorzugt um Acrylsäure und/oder AMPS bzw. deren Salze.

Bevorzugt betrifft die Erfindung ein Copolymer, welches mindestens zwei verschiedene hydrophile Monomere (b) umfasst, und es sich dabei um mindestens ein neutrales hydrophiles Monomer (b1), und mindestens ein hydrophiles anionisches Monomer (b2) handelt, welches mindestens eine saure Gruppe ausgewählt aus der Gruppe -COOH, -SO₃H und -PO₃H₂ (beziehungsweise deren Salze) enthält.

Bevorzugt handelt es sich um ein Copolymer, welches als Monomer (b1) Acrylamid und als Monomer (b2) ein saure Gruppen umfassendes Monomer umfasst.

Bevorzugt handelt es sich um ein Copolymer, welches als Monomer (b1) Acrylamid und als Monomer (b2) ein saure Gruppen umfassendes Monomer umfasst, wobei die saure Gruppe -SO₃H ist. Insbesondere bevorzugt handelt es sich um ein Copolymer, welches als Monomer (b1) Acrylamid und als Monomer (b2) 2-Acrylamido-2-methylpropansulfonsäure (AMPS) umfasst.

Weiterhin bevorzugt handelt es sich um ein Copolymer, welches als Monomer (b1) Acrylamid und mindestens zwei weitere verschiedene saure Gruppen umfassende Monomere (b2) umfasst. Insbesondere bevorzugt handelt es sich um ein Copolymer, welches als Monomer (b1) Acrylamid und als saure Gruppen umfassende Monomere (b2) ein Monomer umfassend die Gruppe -SO₃H und ein Monomer umfassend die Gruppe -COOH umfasst.

In einer bevorzugten Ausführungsform handelt es sich um ein Copolymer, welches als Monomer (b1) Acrylamid und als Monomer (b2) Acrylsäure umfasst.

Weiterhin bevorzugt handelt es sich um ein Copolymer, welches als Monomer (b1) Acrylamid, als Monomere (b2) 2-Acrylamido-2-methylpropansulfonsäure (AMPS) und ein Monomer umfassend die Gruppe -COOH umfasst. Weiterhin bevorzugt handelt es sich um ein Copolymer, welches als Monomer (b1) Acrylamid, als Monomere (b2) 2-Acrylamido-2-methylpropansulfonsäure (AMPS) und Acrylsäure umfasst.

Die Menge der Monomere (b) im erfindungsgemäßen Copolymer beträgt 25 bis 99,9 Gew.-% bezogen auf die Gesamtmenge aller Monomere im Copolymer, bevorzugt 25 bis 99,5 Gew.-%. Die genaue Menge richtet sich nach der Art und dem gewünschten Verwendungszweck der hydrophob assoziierenden Copolymere und wird vom Fachmann entsprechend festgelegt.

Weitere geeignete monoethylenisch ungesättigte, hydrophile Monomere (b) sind in WO 2010/133527 auf den Seiten 13 bis 16 beschrieben.

Bevorzugt handelt es sich um ein Copolymer umfassend die folgenden Monomere
(a) 0,1 bis 20 Gew.-%, bevorzugt 0,5 bis 12 Gew.-%, mindestens eines erfindungsgemäßen Makromonomers M, sowie
(b) 40 bis 60 Gew.-% Acrylamid und 40 bis 60 Gew.-% Acrylamido-2-methylpropansulfonsäure (AMPS) als monoethylenisch ungesättigtes, hydrophiles Monomer (b).

Weiterhin wurde die Verwendung derartiger Copolymere zur Erschließung, Ausbeutung und Komplettierung unterirdischer Erdöl- und Erdgaslagerstätten gefunden, sowie für die jeweilige Verwendung bevorzugte Zusammensetzungen der Copolymere. Die erfindungsgemäßen, hydrophob assoziierenden Copolymere umfassen neben den bereits erwähnten hydrophoben Gruppen daher hydrophile Gruppen in einer solchen Menge, dass die geschilderte Wasserlöslichkeit zumindest im für die jeweilige Anwendung vorgesehenen pH-Bereiche gewährleistet ist.

Die folgenden Beispiele sollen die Erfindung näher illustrieren:

### Teil I: Synthesen

### I-a Herstellung der Makromonomere

Soweit nicht explizit erwähnt, wurden die Reaktionen so durchgeführt, dass der Zielfüllgrad am Ende der Alkoxylierung bei ca. 65% des Reaktorvolumens lag.

### Beispiel M1 HBVE - 22 EO (0,4 mol-% Kalium-Ionen)

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32% KOMe in Methanol (MeOH), entspricht 0,0048 mol Kalium) wurden zugefahren und der Rührbehälter auf einen Druck kleiner 10 mbar evakuiert, auf 80°C aufgeheizt, 70 min bei 80°C und einem Druck von kleiner 10 mbar betrieben. MeOH wurde abdestilliert.

In einer alternativen Durchführung wurde die Kaliummethanolat (KOMe)-Lösung (32% KOMe in Methanol (MeOH)) zugefahren und der Rührbehälter auf einen Druck von 10 - 20 mbar evakuiert, auf 65°C aufgeheizt, 70 min bei 65°C und einem Druck von 10 - 20 mbar betrieben. MeOH wurde abdestilliert.

Es wurde dreimal mit N₂ (Stickstoff) gespült. Danach wurde der Behälter auf Druckdichtigkeit geprüft, 0,5 bar Überdruck (1,5 bar absolut) eingestellt und auf 120°C aufgeheizt. Man entspannte auf 1 bar absolut und dosierte 1126 g (25,6 mol) Ethylenoxid (EO) zu bis pₘₐₓ 3.9 bar absolut und Tₘₐₓ 150°C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h.

Es wurde bis Druckkonstanz nachgerührt bei ca. 145-150°C (1 h), auf 100°C abgekühlt und bei einem Druck von weniger als 10 mbar für 1 h von Niedrigsiedern befreit. Die Ware wurde bei 80°C unter N₂ abgefüllt.

Die Analytik (OH-Zahl, GPC, 1H-NMR in CDCl₃, 1H-NMR in MeOD) bestätigte die Struktur.

### Beispiel M2 HBVE - 22 EO - 10,6 PeO (0,4 mol-% Kalium-Ionen, 4,6 mol-% Natrium-Ionen), Addition des PeO bei 140°C bis 3,2 bar

In einem 2 l Druckautoklaven mit Ankerrührer wurden 135,3 g (1,16 mol) Hydroxybutylvinylether (mit 100 ppm KOH stabilisiert) vorgelegt und der Rührer angestellt. 1,06 g KOMe-Lösung (32% KOMe in MeOH, entspricht 0,0048 mol K) wurden zugefahren und der Rührbehälter auf <10 mbar evakuiert, auf 80°C aufgeheizt, 70 min bei 80°C und <10 mbar betrieben. MeOH wurde abdestilliert.

In einer alternativen Durchführung wurde die Kaliummethanolat (KOMe)-Lösung (32% KOMe in Methanol (MeOH)) zugefahren und der Rührbehälter auf einen Druck von 10 - 20 mbar evakuiert, auf 65°C aufgeheizt, 70 min bei 65°C und einem Druck von 10 - 20 mbar betrieben. MeOH wurde abdestilliert.

Es wurde dreimal mit N₂ gespült. Danach wurde der Behälter auf Druckdichtigkeit geprüft, 0,5 bar Überdruck (1,5 bar absolut) eingestellt und auf 120°C aufgeheizt. Man entspannte auf 1 bar absolut und dosierte 255 g (5,8 mol) EO zu bis pₘₐₓ 3,9 bar absolut und Tₘₐₓ 150°C betrug. Es wurde bis zur Druckkonstanz nachgerührt bei ca. 145-150°C (1 h), auf 100°C abgekühlt und bei einem Druck von weniger als 10 mbar für 1 h von Niedrigsiedern befreit. Die Ware (HBVE-5 EO) wurde bei 80°C unter N₂ abgefüllt.

In einem 2 l Druckautoklaven mit Ankerrührer wurden 180 g (0,54 mol) von obigem HBVE-5 EO vorgelegt und der Rührer einschaltet. Danach wurden 4,32 g 30%-ige NaOMe (Natriummethanolat) in MeOH Lösung (0,024 mol NaOMe, 1,30 g NaOMe) zugegeben, Vakuum von <10 mbar angelegt, auf 100°C erhitzt und für 80 min gehalten, um das MeOH abzudestillieren. Es wurde dreimal mit N₂ gespült. Danach wurde der Behälter auf Druckdichtigkeit geprüft, 0,5 bar Überdruck (1,5 bar absolut) eingestellt und auf 150°C aufgeheizt. Es wurde auf 1,0 bar absolut entspannt. Man dosierte 398 g (9,04 mol) EO bis zu einem Druck von 2 bar absolut und ließ 1 h nachreagieren. Man kühlte auf 140°C ab und dosierte bei 1,2 bar absolut und 140°C 502 g (5,83 mol) PeO (Pentenoxid) zu bis der Druck auf 3,2 bar absolut anstieg. Das PeO konnte innerhalb von zwei Stunden zudosiert werden. Es wurde auf 80°C abgekühlt, Restoxid abgezogen bis der Druck für mindestens 10 min unter 10 mbar lag. Das Vakuum wurde mit N₂ aufgehoben und es erfolgte die Zugabe von 100 ppm BHT (Butylhydroxytoluol). Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M3 HBVE - 22 EO - 10,5 PeO (0,4 mol-% Kalium-Ionen, 3,3 mol-% Natrium-Ionen), Addition des PeO bei 140°C bis 2,1 bar

In einem 2 l Druckautoklaven mit Ankerrührer wurden 135,3 g (1,16 mol) Hydroxybutylvinylether (mit 100 ppm KOH stabilisiert) vorgelegt und der Rührer angestellt. 1,06 g KOMe-Lösung (32% KOMe in MeOH, entspricht 0,0048 mol K) wurden zugefahren und der Rührbehälter auf <10 mbar evakuiert, auf 80°C aufgeheizt, 70 min bei 80°C und <10 mbar betrieben. MeOH wurde abdestilliert.

In einer alternativen Durchführung wurde die Kaliummethanolat (KOMe)-Lösung (32% KOMe in Methanol (MeOH)) zugefahren und der Rührbehälter auf einen Druck von 10 - 20 mbar evakuiert, auf 65°C aufgeheizt, 70 min bei 65°C und einem Druck von 10 - 20 mbar betrieben. MeOH wurde abdestilliert.

Es wurde dreimal mit N₂ gespült. Danach wurde der Behälter auf Druckdichtigkeit geprüft, 0,5 bar Überdruck (1,5 bar absolut) eingestellt und auf 120°C aufgeheizt. Man entspannte auf 1 bar absolut und dosierte 255 g (5,8 mol) EO zu bis pₘₐₓ 3,9 bar absolut und Tₘₐₓ 150°C betrug. Es wurde bis zur Druckkonstanz nachgerührt bei ca. 145-150°C (1 h), auf 100°C abgekühlt und bei einem Druck von weniger als 10 mbar für 1 h von Niedrigsiedern befreit. Die Ware (HBVE-5 EO) wurde bei 80°C unter N₂ abgefüllt.

In einem 2 l Druckautoklaven mit Ankerrührer wurden 180 g (0,54 mol) HBVE-5 EO vorgelegt und der Rührer einschaltet. Danach wurden 3,18 g 30%-ige NaOMe in MeOH Lösung (0,018 mol NaOMe, 0,95 g NaOMe) zugegeben, Vakuum von <10 mbar angelegt, auf 100°C erhitzt und für 80 min gehalten, um das MeOH abzudestillieren. Es wurde dreimal mit N₂ gespült. Danach wurde der Behälter auf Druckdichtigkeit geprüft, 0,5 bar Überdruck (1,5 bar absolut) eingestellt und auf 150°C aufgeheizt. Es wurde auf 1,0 bar absolut entspannt. Man dosierte 398 g (9,04 mol) EO bis zu einem Druck von 2 bar absolut zu, ließ 1 h nachreagieren, anschließend wurde auf 100°C abgekühlt und bei einem Druck von weniger als 10 mbar für 1 h von Niedrigsiedern befreit. Die Ware (HBVE-22 EO) wurde bei 80°C unter N₂ abgefüllt.

In einem 1 l Autoklaven mit Ankerrührer wurden 450 g (0,425 mol) von obigem HBVE-22 EO vorgelegt und der Rührer einschaltet. Es wurde dreimal mit N₂ gespült. Danach wurde der Behälter auf Druckdichtigkeit geprüft, 0,5 bar Überdruck (1,5 bar absolut) eingestellt und auf 140°C aufgeheizt. Es wurde auf 1,0 bar absolut entspannt.

Nun wurden bei 1,4 bar absolut und 140°C 384 g (5,83 mol) PeO mit 48 g/h zudosiert bis der Druck auf 2,1 bar absolut anstieg. Es musste zweimal unterbrochen werden. Man ließ bei 140°C abreagieren bis der Druck wieder fiel. Das PeO wurde innerhalb von zwei Tagen zudosiert. Es wurde auf 80°C abgekühlt, Restoxid abgezogen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M4 HBVE - 22 EO - 10 PeO (0.4 mol-% Kalium-Ionen, 4.6 mol-% Natrium-Ionen), Addition des PeO bei 127°C bis 2,1 bar

Als Ausgangsmaterial wurde Makromonomer M1 aus Beispiel M1 verwendet. In einem 2 l Druckautoklaven mit Ankerrührer wurden 745 g (0,69 mol) HBVE-22 EO vorgelegt und der Rührer einschaltet. Danach wurden 5,36 g 32%-ige NaOMe in MeOH Lösung (0,0317 mol NaOMe, 1,71 g NaOMe) zugegeben, Vakuum von <10 mbar angelegt, auf 80°C erhitzt und für 80 min gehalten, um das MeOH abzudestillieren.

Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1 bar absolut eingestellt.

Es wurden 591 g (6,9 mol) PeO bei 127°C zudosiert, pₘₐₓ betrug 2,1 bar absolut. Ein zwischenzeitliches zweimaliges Entspannen infolge Füllgradzunahme wurde notwendig. Man stoppte die PeO-Dosage, ließ 2 h ausreagieren bis der Druck konstant war und entspannte auf 1,0 bar absolut. Danach wurde die Zudosage von PeO fortgeführt. Pₘₐₓ betrug weiterhin 2,1 bar. Nach Ende der PeO-Dosage wurde bis Druckkonstanz bzw. 4 h nachreagieren gelassen. Es wurde auf 110°C abgekühlt, Restoxid abgezogen bis der Druck für mindestens 10 min unter 10 mbar lag. Dann erfolgte die Zugabe von 0,5% Wasser bei 110°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M5 HBVE - 22 EO - 11 PeO (0,4 mol-% Kalium-Ionen, 4,6 mol-% Natrium-Ionen), Addition des PeO bei 127°C bis 2,1 bar

Die Herstellung erfolgte analog Beispiel M4 mit dem Unterschied, dass 11 statt 10 eq (Mol-Äquivalente) PeO addiert wurden.

### Beispiel M6 HBVE - 24,5 EO - 11 PeO (0,4 mol-% Kalium-Ionen, 4,6 mol-% Natrium-Ionen), Addition des PeO bei 127°C bis 2,1 bar

Als Ausgangsmaterial wurde Makromonomer M1 aus Beispiel M1 verwendet. In einem 2 l Druckautoklaven mit Ankerrührer wurden 650 g (0,60 mol) HBVE-22 EO vorgelegt und der Rührer einschaltet. Danach wurden 5,96 g 25%-ige NaOMe in MeOH Lösung (0,0276 mol NaOMe, 1,49 g NaOMe) zugegeben, Vakuum von <10 mbar angelegt, auf 100°C erhitzt und für 80 min gehalten, um das MeOH abzudestillieren.

Man spülte dreimal mit N₂. Danach wurde der Behälter auf Druckdichtigkeit geprüft, 0,5 bar Überdruck (1,5 bar absolut) eingestellt, auf 120°C aufgeheizt und danach der Druck auf 1 bar absolut eingestellt. Es wurden 66 g (1,577 mol) EO zudosiert bis zu einer Temperatur von 127°C, pₘₐₓ betrug 2,1 bar absolut. Es wurde 30 min gewartet bis sich Druckkonstanz einstellte, danach wurde auf 1,0 bar absolut entspannt.

Es wurden 567 g (6,6 mol) PeO bei 127°C zudosiert, pₘₐₓ betrug 2.1 bar absolut. Ein zwischenzeitliches zweimaliges Entspannen infolge Füllgradzunahme wurde notwendig. Man stoppte die PeO-Dosage, ließ 2 h ausreagieren bis der Druck konstant war und entspannte auf 1,0 bar absolut. Danach wurde die Zudosage von PeO fortgeführt. Pₘₐₓ betrug weiterhin 2,1 bar. Nach Ende der PeO-Dosage wurde bis Druckkonstanz bzw. 4 h nachreagieren gelassen. Es wurde auf 110°C abgekühlt und Restoxid abgezogen bis der Druck für mindestens 10 min unter 10 mbar lag. Dann erfolgte die Zugabe von 0,5% Wasser bei 110°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M7 HBVE - 24,5 EO - 10 PeO (0,4 mol-% Kalium-Ionen, 4,6 mol-% Natrium-Ionen), Addition des PeO bei 127°C bis 2,1 bar

Herstellung erfolgte analog Beispiel M6 mit dem Unterschied, dass 10 statt 11 eq Pentenoxid addiert wurden.

### Beispiel M8 HBVE - 24,5 EO - 10 PeO (0,9 mol-% Kalium-Ionen, 4,1 mol-% Natrium-Ionen), Addition des PeO bei 127°C bis 2,1 bar

Die Herstellung erfolgte analog Beispiel M6 mit dem Unterschied, dass die Katalysatorkonzentration 0,9 mol-% Kalium-Ionen und 4,1 mol-% Natrium-Ionen betrug und dass 10 statt 11 eq PeO addiert wurden.

### Beispiel M9 HBVE - 24,5 EO - 10 PeO (1,5 mol-% Kalium-Ionen, 4,6 mol-% Natrium-Ionen), Addition des PeO bei 127°C bis 2,1 bar

Die Herstellung erfolgte analog Beispiel M6 mit dem Unterschied, dass die Katalysatorkonzentration 1,5 mol-% Kalium-Ionen und 4,1 mol-% Natrium-Ionen betrug und dass 10 statt 11 eq PeO addiert wurden.

### Beispiel M10 HBVE - 24,5 EO - 10 PeO (0,4 mol-% Kalium-Ionen, 5,5 mol-% Natrium-Ionen), Addition des PeO bei 127°C bis 2,1 bar

Als Ausgangsmaterial wurde Makromonomer M1 aus Beispiel M1 verwendet. In einem 2 l Druckautoklaven mit Ankerrührer wurden 684,0 g (0,631 mol) HBVE-22 EO vorgelegt und der Rührer einschaltet. Danach wurden 2,78 g 50%-ige NaOH (Natriumhydroxid)-Lösung (0,0348 mol NaOH, 1,39 g NaOH) zugegeben, ein Vakuum von <10 mbar angelegt, auf 100°C erhitzt und für 80 min gehalten, um das Wasser abzudestillieren.

Man spülte dreimal mit N₂. Danach wurde der Behälter auf Druckdichtigkeit geprüft, 0,5 bar Überdruck (1,5 bar absolut) eingestellt, auf 120°C aufgeheizt und danach der Druck auf 1,6 bar absolut eingestellt. Es wurden 69,4 g (1,577 mol) EO zudosiert bei 127°C, pₘₐₓ betrug 2,1 bar absolut. Es wurde 30 min gewartet bis sich Druckkonstanz einstellte, danach wurde auf 1,0 bar absolut entspannt.

Es wurden 542,5 g (6,03 mol) PeO bei 127°C zudosiert, pₘₐₓ betrug 2,1 bar absolut. Ein zwischenzeitliches Entspannen infolge Füllgradzunahme wurde notwendig. Man stoppte die PeO-Dosage, ließ 1 h ausreagieren bis Druck konstant war, entspannte auf 1,0 bar absolut. Danach wurde die Zudosage von PeO fortgeführt. Pₘₐₓ betrug weiterhin 2,1 bar (erstes Entspannen nach 399 g PeO, Gesamtdosierzeit PeO 7 h inkl. Entspannungspause). Nach Ende der PeO-Dosage wurde bis Druckkonstanz bzw. 3 h nachreagieren gelassen. Es wurde auf 110°C abgekühlt, Restoxid im Vakuum entfernt bis der Druck für mindestens 10 min unter 10 mbar lag. Dann erfolgte die Zugabe von 0,5% Wasser bei 110°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M11 HBVE - 24,5 EO - 9 PeO (0,4 mol-% Kalium-Ionen, 5,5 mol-% Natrium-Ionen), Addition des PeO bei 127°C bis 2,1 bar

Die Herstellung erfolgte analog Beispiel M10 mit dem Unterschied, dass 9 statt 10 eq PeO addiert wurden.

### Beispiel M12 HBVE - 24,5 EO - 9 PeO (5,8 mol-% Kalium-Ionen), Addition des PeO bei 127°C bis 2,1 bar

Als Ausgangsmaterial wurde Makromonomer M1 aus Beispiel M1 verwendet. In einem 2 l Druckautoklaven mit Ankerrührer wurden 889,2 g (0,820 mol) HBVE-22 EO vorgelegt und der Rührer einschaltet. Danach wurden 9,69 g 32%-ige KOMe in MeOH-Lösung (0,0443 mol KOMe, 3,11 g KOMe) zugegeben, Vakuum von <10 mbar angelegt, auf 80°C erhitzt und für 80 min gehalten, um MeOH abzudestillieren.

Man spülte dreimal mit N₂. Danach wurde der Behälter auf Druckdichtigkeit geprüft, 0,5 bar Überdruck (1,5 bar absolut) eingestellt, auf 120°C aufgeheizt und danach der Druck auf 1 bar absolut eingestellt. Es wurden 90,2 g (2,050 mol) EO zudosiert bis 140°C. Es wurde 30 min gewartet bis sich Druckkonstanz einstellte, danach wurde auf 1,0 bar absolut bei 120°C entspannt.

Man zog eine größere Probe, so dass im Reaktor 789 g (0,66 mol) HBVE-24,5 EO verblieben. Es wurde zur Sicherheit erneut mit N₂ inertisiert, 1,0 bar absolut eingestellt und auf 127°C erwärmt. Es wurden 511 g (5,95 mol) PeO bei 127°C zudosiert, pₘₐₓ betrug 2,1 bar absolut. Ein zwischenzeitliches Entspannen infolge Füllgradzunahme wurde notwendig. Man stoppte die PeO-Dosage, ließ 2 h ausreagieren bis Druck konstant war und entspannte auf 1,0 bar absolut. Danach wurde die Zudosage von PeO fortgeführt. Pₘₐₓ betrug weiterhin 2,1 bar. Nach Ende der PeO-Dosage wurde bis Druckkonstanz bzw. 3 h nachreagieren gelassen. Es wurde auf 110°C abgekühlt, Restoxid im Vakuum entfernt bis der Druck für mindestens 10 min unter 10 mbar lag. Dann erfolgte die Zugabe von 0,5% Wasser bei 110°C und anschließendes Abziehen, bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M13 HBVE - 24,5 EO - 8 PeO (0,4 mol-% Kalium-Ionen, 4,6 mol-% Natrium-Ionen), Addition des PeO bei 127°C bis 2,1 bar

Die Herstellung erfolgte analog Beispiel M6 mit dem Unterschied, dass 8 statt 11 eq PeO addiert wurden.

### Beispiel M14 HBVE - 26,5 EO - 10 PeO (0,4 mol-% Kalium-Ionen, 5,5 mol-% Natrium-Ionen), Addition des PeO bei 127°C bis 2,1 bar

Die Herstellung erfolgte analog Beispiel M10 mit dem Unterschied, dass ausgehend von HBVE -22 EO 4,5 eq EO anstatt 2,5 eq EO addiert wurden.

### Beispiel M15 HBVE - 24,5 EO - 10 PeO (0,4 mol-% Kalium-Ionen, 5,5 mol-% Natrium-Ionen), Addition des PeO bei 122°C bis 2,1 bar

Die Herstellung erfolgte analog Beispiel M10 mit dem Unterschied, dass PeO bei 122°C anstatt 127°C addiert wurde.

### Beispiel M16 HBVE - 24,5 EO - 10 PeO (0,4 mol-% Kalium-Ionen, 5,5 mol- % Natrium-Ionen), Addition des PeO bei 132°C bis 2,1 bar

Die Herstellung erfolgte analog Beispiel M10 mit dem Unterschied, dass PeO bei 132°C anstatt 127°C addiert wurde.

### Beispiel M17 HBVE - 24,5 EO - 10 BuO (0,4 mol-% Kalium-Ionen, 5,5 mol-% Natrium-Ionen), Addition des BuO bei 127°C bis 2,1 bar

Als Ausgangsmaterial wurde Monomer M1 aus Beispiel M1 verwendet. In einem 2 l Druckautoklaven mit Ankerrührer wurden 730,8 g (0,674 mol) HBVE-22 EO vorgelegt und der Rührer einschaltet. Danach wurden 2,97 g 50%-ige NaOH-Lösung (0,0371 mol NaOH, 0,85 g NaOH) zugegeben, Vakuum von <10 mbar angelegt, auf 100°C erhitzt und für 80 min gehalten, um das Wasser abzudestillieren.

Man spülte dreimal mit N₂. Danach wurde der Behälter auf Druckdichtigkeit geprüft, 0,5 bar Überdruck (1,5 bar absolut) eingestellt, auf 120°C aufgeheizt und danach der Druck auf 1,6 bar absolut eingestellt. Es wurden 74,1 g (1,685 mol) EO zudosiert bis 127°C, pₘₐₓ betrug 3,9 bar absolut. Es wurde 30 min gewartet bis sich Druckkonstanz einstellte, danach wurde auf 1,0 bar absolut entspannt.

Es wurden 485,3 g (6,74 mol) BuO (Butylenoxid) bei 127°C zudosiert, pₘₐₓ betrug 2,1 bar absolut. Ein zwischenzeitliches Entspannen infolge Füllgradzunahme wurde notwendig. Man stoppte die BuO-Dosage, ließ 1 h ausreagieren bis Druck konstant war und entspannte auf 1,0 bar absolut. Danach wurde die Zudosage von BuO fortgeführt. Pₘₐₓ betrug weiterhin 2,1 bar (erstes Entspannen nach 246 g BuO, Gesamtdosierzeit BuO 10 h inkl. Entspannungspause). Nach Ende der BuO-Dosage ließ man bis Druckkonstanz bzw. 3 h nachreagieren. Es wurde auf 110°C abgekühlt, Restoxid abgezogen bis der Druck für mindestens 10 min unter10 mbar lag. Dann erfolgte die Zugabe von 0,5% Wasser bei 110°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M18 HBVE - 24,5 EO - 12 BuO (0,4 mol-% Kalium-Ionen, 5,5 mol-% Natrium-Ionen), Addition des BuO bei 127°C bis 2,1 bar

Die Herstellung erfolgte analog Beispiel M17 mit dem Unterschied, dass 12 statt 10 eq BuO addiert wurden.

### Beispiel M19 HBVE - 24,5 EO - 14 BuO (0,4 mol-% Kalium-Ionen, 5,5 mol-% Natrium-Ionen), Addition des BuO bei 127°C bis 2,1 bar

Die Herstellung erfolgte analog Beispiel M17mit dem Unterschied, dass 14 statt 10 eq BuO addiert wurden.

### Beispiel M20 HBVE - 24.5 EO - 16 BuO (0,4 mol-% Kalium-Ionen, 5,5 mol-% Natrium-Ionen), Addition des BuO bei 127°C bis 2,1 bar

Die Herstellung erfolgte analog Beispiel M17mit dem Unterschied, dass 16 statt 10 eq BuO addiert wurden.

### Beispiel M21 HBVE - 24,5 EO - 18 BuO (0,4 mol-% Kalium-Ionen, 5,5 mol-% Natrium-Ionen), Addition des BuO bei 127°C bis 2,1 bar

Die Herstellung erfolgte analog Beispiel M17mit dem Unterschied, dass 18 statt 10 eq BuO addiert wurden.

### Beispiel M22 HBVE - 24,5 EO - 16 BuO (5,8 mol-% Kalium-Ionen), Addition des BuO bei 127°C bis 3,1 bar

Als Ausgangsmaterial wurde Monomer M1 aus Beispiel M1 verwendet. In einem 2 l Druckautoklaven mit Ankerrührer wurden 622,8 g (0,575 mol) HBVE-22 EO vorgelegt und der Rührer einschaltet. Danach wurden 6,92 g 32%-ige KOMe in MeOH Lösung (0,0316 mol KOMe, 2,21 g KOMe) zugegeben, Vakuum von <10 mbar angelegt, auf 80°C erhitzt und für 80 min gehalten, um das Methanol abzudestillieren.

Man spülte dreimal mit N₂. Danach wurde der Behälter auf Druckdichtigkeit geprüft, 0,5 bar Überdruck (1,5 bar absolut) eingestellt, auf 120°C aufgeheizt und danach der Druck auf 1,6 bar absolut eingestellt. Es wurden 50,3 g (1,144 mol) EO zudosiert bis 127°C, pₘₐₓ betrug 3,9 bar absolut. Es wurde 30 min gewartet bis sich Druckkonstanz einstellte, danach wurde auf 1,0 bar absolut entspannt.

Es wurden 662 g (9,19 mol) BuO bei 127°C zudosiert, pₘₐₓ betrug 3,1 bar absolut. Nach Ende der BuO-Dosage ließ man bis zur Druckkonstanz bzw. 5 h nachreagieren. Es wurde auf 110°C abgekühlt, Restoxid abgezogen bis der Druck für mindestens 10 min unter 10 mbar lag. Dann erfolgte die Zugabe von 0,5% Wasser bei 110°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M23 HBVE - 24,5 EO - 16 BuO (0,4 mol-% Kalium-Ionen, 11 mol-% Natrium-Ionen), Addition des BuO bei 127°C bis 3,1 bar

Als Ausgangsmaterial wurde Monomer M1 aus Beispiel M1 verwendet. In einem 2 l Druckautoklaven mit Ankerrührer wurden 595,1 g (0,549 mol) HBVE-22 EO vorgelegt und der Rührer eingeschaltet. Danach wurden 4,83 g 50%-ige NaOH-Lösung (0,060 mol NaOH, 2,41 g NaOH) zugegeben, Vakuum von <10 mbar angelegt, auf 100°C erhitzt und für 80 min gehalten, um das Wasser abzudestillieren.

Man spülte dreimal mit N₂. Danach wurde der Behälter auf Druckdichtigkeit geprüft, 0,5 bar Überdruck (1,5 bar absolut) eingestellt, auf 120°C aufgeheizt und danach der Druck auf 1,6 bar absolut eingestellt. Es wurden 60,4 g (1,373 mol) EO zudosiert bis 127°C, pₘₐₓ betrug 3,9 bar absolut. Es wurde 30 min gewartet bis sich Druckkonstanz einstellte, danach wurde auf 1,0 bar absolut entspannt.

Es wurden 632,2 g (8,748 mol) BuO bei 127°C zudosiert, pₘₐₓ betrug 3,1 bar absolut. Ein zwischenzeitliches Entspannen infolge Füllgradzunahme wurde notwendig. Man stoppte die BuO-Dosage, ließ 1 h ausreagieren bis Druck konstant war und entspannte auf 1,0 bar absolut. Danach wurde die Zudosage von BuO fortgeführt. Pₘₐₓ betrug weiterhin 3,1 bar (erstes Entspannen nach 334 g BuO, Gesamtdosierzeit BuO 5 h inkl. Entspannungspause). Nach Ende der BuO-Dosage erwärmte man auf 135°C und ließ 3,5 h nachreagieren. Es wurde auf 100°C abgekühlt, Restoxid abgezogen bis der Druck für mindestens 10 min unter 10 mbar lag. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M24 HBVE - 23 EO - 17 BuO - 2,5 EO (0,4 mol-% Kalium-Ionen, 5,5 mol-% Natrium-Ionen), Addition des BuO bei 127°C bis 3,1 bar

Als Ausgangsmaterial wurde Monomer M1 aus Beispiel M1 verwendet. In einem 2 l Druckautoklaven mit Ankerrührer wurden 576,7 g (0,532 mol) HBVE-22 EO vorgelegt und der Rührer eingeschaltet. Danach wurden 2,33 g 50%-ige NaOH-Lösung (0,029 mol NaOH, 1,17 g NaOH) zugegeben, Vakuum von <10 mbar angelegt, auf 100°C erhitzt und für 80 min gehalten, um das Wasser abzudestillieren.

Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1,6 bar absolut eingestellt. Es wurden 23,4 g (0,532 mol) EO zudosiert bei 127°C, pₘₐₓ betrug 3,9 bar absolut. Es wurde 30 min gewartet bis sich Druckkonstanz einstellte, danach wurde auf 1,0 bar absolut entspannt.

Es wurden 651,2 g (9,044 mol) BuO bei 127°C zudosiert, pₘₐₓ betrug 3,1 bar absolut. Nach Ende der BuO-Dosage erwärmte man auf 135°C und ließ 2 h nachreagieren. Danach wurden 58,5 g (1,331 mol) EO bei 135°C zudosiert, pₘₐₓ betrug 3,2 bar absolut. Nach Ende der EO-Dosage ließ man 2 h nachreagieren. Es wurde auf 100°C abgekühlt, Restoxid abgezogen bis der Druck für mindestens 10 min unter 10 mbar lag. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M25 HBVE - 24,5 EO - 16 BuO - 3,5 EO (0,4 mol-% Kalium-Ionen, 5,5 mol-% Natrium-Ionen), Addition des BuO bei 127°C bis 3,1 bar

Als Ausgangsmaterial wurde Monomer M1 aus Beispiel M1 verwendet. In einem 2 l Druckautoklaven mit Ankerrührer wurden 588,6 g (0,543 mol) HBVE-22 EO vorgelegt und der Rührer eingeschaltet. Danach wurden 2,39 g 50%-ige NaOH-Lösung (0,030 mol NaOH, 1,19 g NaOH) zugegeben, Vakuum von <10 mbar angelegt, auf 100°C erhitzt und für 80 min gehalten, um das Wasser abzudestillieren.

Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1,6 bar absolut eingestellt. Es wurden 59,7 g (1,358 mol) EO zudosiert bei 127°C, pₘₐₓ betrug 3,9 bar absolut. Es wurde 30 min gewartet bis sich Druckkonstanz einstellte, danach wurde auf 1,0 bar absolut entspannt.

Es wurden 625,5 g (8,688 mol) BuO bei 127°C zudosiert, pₘₐₓ betrug 3,1 bar absolut. Ein zwischenzeitliches Entspannen infolge Füllgradzunahme wurde notwendig. Man stoppte die BuO-Dosage, ließ 1 h ausreagieren bis Druck konstant war und entspannte auf 1,0 bar absolut. Danach wurde die Zudosage von BuO fortgeführt. Pₘₐₓ betrug weiterhin 3,1 bar (erstes Entspannen nach 610 g BuO, Gesamtdosierzeit BuO 8 h inkl. Entspannungspause). Nach Ende der BuO-Dosage ließ man 8 h nachreagieren und erwärmte dann auf 135°C. Danach wurden 83,6 g (1,901 mol) EO bei 135°C zudosiert, pₘₐₓ betrug 3,1 bar absolut. Nach Ende der EO-Dosage ließ man 4 h nachreagieren. Es wurde auf 100°C abgekühlt, Restoxid abgezogen bis der Druck für mindestens 10 min unter 10 mbar lag. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M26 HBVE - 24,5 EO - 16 BuO - 5 EO (0,4 mol-% Kalium-Ionen, 5,5 mol-% Natrium-Ionen), Addition des BuO bei 127°C bis 3,1 bar

Als Ausgangsmaterial wurde Monomer M1 aus Beispiel M1 verwendet. Die Herstellung erfolgte analog zu Beispiel M25 mit dem Unterschied, dass nach Ende der BuO-Dosage und Polymerisation 5 statt 3,5 eq EO addiert wurden, d.h. es wurden 119,5 g (2,715 mol) EO bei 135°C zudosiert.

Die Analytik (Massenspektrum, GPC, 1H-NMR in CDCl₃, 1H-NMR in MeOD) bestätigte die Struktur.

### Beispiel M27 HBVE - 24,5 EO - 10 BuO - 3,5 EO (0,4 mol-% Kalium-Ionen, 5,5 mol-% Natrium-Ionen), Addition des BuO bei 127°C bis 3,1 bar

Als Ausgangsmaterial wurde Monomer M1 aus Beispiel M1 verwendet. In einem 2 l Druckautoklaven mit Ankerrührer wurden 685,2 g (0,632 mol) HBVE-22 EO vorgelegt und der Rührer eingeschaltet. Danach wurden 2,78 g 50%-ige NaOH-Lösung (0,035 mol NaOH, 1,39 g NaOH) zugegeben, Vakuum von <10 mbar angelegt, auf 100°C erhitzt und für 80 min gehalten, um das Wasser abzudestillieren.

Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1,6 bar absolut eingestellt. Es wurden 69,8 g (1,587 mol) EO zudosiert bei 127°C, pₘₐₓ betrug 3,9 bar absolut. Es wurde 30 min gewartet bis sich Druckkonstanz einstellte, danach wurde auf 1,0 bar absolut entspannt.

Es wurden 455,2 g (6,322 mol) BuO bei 127°C zudosiert, pₘₐₓ betrug 3,1 bar absolut. Nach Ende der BuO-Dosage ließ man 7 h nachreagieren. Danach wurden 97,4 g (2,213 mol) EO bei 127°C zudosiert, pₘₐₓ betrug 3,1 bar absolut. Nach Ende der EO-Dosage ließ man 2 h nachreagieren. Es wurde auf 100°C abgekühlt, Restoxid abgezogen bis der Druck für mindestens 10 min unter 10 mbar lag. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M28 HBVE - 24,5 EO - 5 BuO - 3,5 EO (0,4 mol-% Kalium-Ionen, 5,5 mol-% Natrium-Ionen), Addition des BuO bei 127°C bis 3,1 bar

Als Ausgangsmaterial wurde Monomer M1 aus Beispiel M1 verwendet. In einem 2 l Druckautoklaven mit Ankerrührer wurden 822,0 g (0,758 mol) HBVE-22 EO vorgelegt und der Rührer eingeschaltet. Danach wurden 3,34 g 50%-ige NaOH-Lösung (0,042 mol NaOH, 1,67 g NaOH) zugegeben, Vakuum von <10 mbar angelegt, auf 100°C erhitzt und für 80 min gehalten, um das Wasser abzudestillieren.

Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1,6 bar absolut eingestellt. Es wurden 83,4 g (1,895 mol) EO zudosiert bei 127°C, pₘₐₓ betrug 3,9 bar absolut. Es wurde 30 min gewartet bis sich Druckkonstanz einstellte, danach wurde auf 1,0 bar absolut entspannt.

Es wurden 273,0 g (3,792 mol) BuO bei 127°C zudosiert, pₘₐₓ betrug 3,1 bar absolut. Nach Ende der BuO-Dosage ließ man 15 h nachreagieren. Danach wurden 116,8 g (2,654 mol) EO bei 127°C zudosiert, pₘₐₓ betrug 3,1 bar absolut. Nach Ende der EO-Dosage ließ man 4 h nachreagieren. Es wurde auf 100°C abgekühlt, Restoxid abgezogen bis der Druck für mindestens 10 min unter 10 mbar lag. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### Beispiel M29 HBVE - 24,5 EO - 22 BuO - 3,5 EO (0,4 mol-% Kalium-Ionen, 5,5 mol-% Natrium-Ionen), Addition des BuO bei 127°C bis 3,1 bar

Als Ausgangsmaterial wurde Monomer M1 aus Beispiel M1 verwendet. In einem 2 l Druckautoklaven mit Ankerrührer wurden 493,3 g (0,455 mol) HBVE-22 EO vorgelegt und der Rührer eingeschaltet. Danach wurden 2,00 g 50%-ige NaOH-Lösung (0,025 mol NaOH, 1,00 g NaOH) zugegeben, Vakuum von <10 mbar angelegt, auf 100°C erhitzt und für 80 min gehalten, um das Wasser abzudestillieren.

Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1,6 bar absolut eingestellt. Es wurden 50,0 g (1,138 mol) EO zudosiert bei 127°C, pₘₐₓ betrug 3,9 bar absolut. Es wurde 30 min gewartet bis sich Druckkonstanz einstellte, danach wurde auf 1,0 bar absolut entspannt.

Es wurden 720,9 g (10,012 mol) BuO bei 127°C zudosiert, pₘₐₓ betrug 3,1 bar absolut. Nach Ende der BuO-Dosage ließ man 9 h nachreagieren. Es wurde auf 135°C erwärmt. Danach wurden 70,1 g (1,593 mol) EO bei 135°C zudosiert, pₘₐₓ betrug 3,1 bar absolut. Nach Ende der EO-Dosage ließ man 2 h nachreagieren. Es wurde auf 100°C abgekühlt, Restoxid abgezogen bis der Druck für mindestens 10 min unter 10 mbar lag. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl3, 1H-NMR in MeOD) bestätigte die Struktur.

### Beispiel M30 HBVE - 24.5 EO - 16 BuO - 3,5 EO (0,4 mol-% Kalium-Ionen, 5,5 mol-% Natrium-Ionen), Addition des BuO bei 127°C von bis 4 bis 6 bar

Als Ausgangsmaterial wurde Monomer M1 aus Beispiel M1 verwendet In einem 2 l Druckautoklaven mit Ankerrührer wurden 568,6 g (0,525 mol) HBVE-22 EO vorgelegt und der Rührer eingeschaltet. Danach wurden 2,31 g 50%-ige NaOH-Lösung (0,029 mol NaOH, 1,16 g NaOH) zugegeben, Vakuum von <10 mbar angelegt, auf 100°C erhitzt und für 80 min gehalten, um das Wasser abzudestillieren.

Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 3 bar absolut eingestellt. Es wurden 57,7 g (1,311 mol) EO zudosiert bei 127°C, pₘₐₓ betrug 6 bar absolut. Es wurde 30 min gewartet bis sich Druckkonstanz einstellte, danach wurde auf 4,0 bar absolut entspannt. Es wurden 604,2 g (8,392 mol) BuO bei 127°C zudosiert, pₘₐₓ betrug 6 bar absolut. Ein zwischenzeitliches Entspannen infolge Füllgradzunahme wurde notwendig. Man stoppte die BuO-Dosage, ließ 1 h ausreagieren bis Druck konstant war und entspannte auf 4,0 bar absolut. Danach wurde die Zudosage von BuO fortgeführt. Pₘₐₓ betrug weiterhin 6 bar (erstes Entspannen nach 505 g BuO, Gesamtdosierzeit BuO 11 h inkl. Entspannungspause). Nach Ende der BuO-Dosage ließ man 6 h bei 127°C nachreagieren. Man entspannte auf 4 bar absolut.

Danach wurden 80,8 g (1,836 mol) EO bei 127°C zudosiert, pₘₐₓ betrug 6 bar absolut. Nach Ende der EO-Dosage ließ man 4 h nachreagieren. Es wurde auf 100°C abgekühlt, Restoxid abgezogen bis der Druck für mindestens 10 min unter 10 mbar lag. Es wurden ca. 1400 ppm an leichtflüchtige Komponenten abgetrennt. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂.

Die Analytik (Massenspektrum, GPC, 1H-NMR in CDCl₃, 1H-NMR in MeOD) bestätigte die Struktur.

### I-b Herstellung der Copolymere basierend auf Makromonomeren (M2-M30)

### Beispiel C1 Allgemeine Herstellung eines Copolymers aus 2 Gew.-% Makromonomer M, 50 Gew.-% Acrylamid und 48 Gew.-% 2-Acrylamido-2-methylpropansulfonsäure

In einem Plastikeimer mit Magnetrührer, pH-Meter und Thermometer wurden 121,2 g einer 50 %-igen wässrigen Lösung von NaATBS (2-Acrylamido-2-methylpropansulfonsäure, Na-Salz) vorgelegt und anschließend nacheinander 155 g destilliertes Wasser, 0,6 g eines Entschäumers (Surfynol® DF-58), 0,2 g eines Silikonentschäumers (Baysilon® EN), 2,3 g Monomer M, 114,4 g einer 50 %-igen wässrigen Lösung von Acrylamid, 1,2 g Pentanatriumdiethylentriaminpentaacetat (Komplexbildner, als 5%-ige wässrige Lösung) und 2,4 g eines nichtionischen Tensids (Isotridekanol, alkoxyliert mit 15 Einheiten Ethylenoxid) zugegeben.

Nach Einstellen des pH-Wertes mit einer 20%-igen bzw. 2%-igen Schwefelsäure-Lösung auf einen Wert von 6 und Zugabe des restlichen Wassers wurde die Monomerlösung auf die Starttemperatur von 5°C eingestellt. Die Gesamtmenge des Wassers wurde so bemessen, dass -nach der Polymerisation- eine Feststoffkonzentration von ca. 30 bis 36 Gew.-% erreicht wurde. Die Lösung wurde in eine Thermoskanne umgefüllt, ein Thermofühler für die Temperaturaufzeichnung angebracht und 30 Minuten mit N₂ gespült. Die Polymerisation wurde anschließend durch Zugabe von 1,6 ml einer 10%-igen wässrigen Lösung eines wasserlöslichen, kationischen Azoinitiators 2,2'-Azo-bis-(2-amidinopropan)-dihydrochlorid (Wako V-50), 0,12 ml einer 1%-igen wässrigen Lösung *tert*.-Butylhydroperoxid sowie 0,24 ml einer 1%-igen Natriumsulfit-Lösung gestartet. Nach Zugabe der Initiatoren stieg die Temperatur innerhalb von 15 bis 30 min auf ca. 80°C. Nach 30 min wurde das Reaktionsgefäß zur Vervollständigung der Polymerisation für ca. 2 h in einen Trockenschrank von ca. 80°C gestellt. Die Gesamtdauer der Polymerisation betrug ca. 2 h bis 2,5 h.

Es wurde ein Gel-Block erhalten, der nach Beendigung der Polymerisation mit Hilfe eines Fleischwolfs zerkleinert wurde. Das erhaltene Gel-Granulat wurde in einem Wirbelschichttrockner bei 55 °C für zwei Stunden getrocknet. Man erhielt dabei ein weißes, hartes Granulat, welches mittels Zentrifugalmühle in einen pulverförmigen Zustand übergeführt wurde. Man erhielt ein Copolymer mit einem gewichtsmittleren Molekulargewicht von ca. 1.000.000 g/mol bis 30.000.000 g/mol.

### Beispiel C2 Copolymer basierend auf Makromonomer

Das Copolymer wurde nach obiger allgemeiner Herstellvorschrift durch Verwendung von Makromonomer aus Vergleichsbeispiel M2 gewonnen.

### Beispiele C3 bis C30

Die Copolymere C3 bis C30 wurden nach obiger allgemeiner Vorschrift durch Verwendung der jeweiligen Monomere M3 bis M30 hergestellt.

### Teil II: Anwendungstechnische Tests

Mit den erhaltenen Copolymeren basierend auf obigen Makromonomeren wurden die folgenden Tests durchgeführt, um deren Eignung zur tertiären Erdölförderung zu bewerten.

### Beschreibung der Messmethoden

### a) Bestimmung der Löslichkeit

Die Copolymere wurden in synthetischen Meerwasser nach DIN 50900 (35 g/l Salzgehalt) so gelöst, dass sich eine Polymerkonzentration von 2000 ppm ergab: 0,5 g des jeweiligen Copolymers wurden in 249 g synthetischem Meerwasser (DIN 50900) 24 h bis zum vollständigen Lösen gerührt (als KPG-Rührer sollte vorzugsweise ein Blattrührer verwendet werden, das Polymer wurde langsam in den sich bildenden Vortex gestreut).

### b) Bestimmung der Viskosität

Von oben genannten Copolymer-Lösungen wurden die Viskositäten an einem Haake-Rheometer mit Doppelspaltgeometrie bei 7 Hz und 60°C bestimmt. Nach ca. 5 min stellte sich ein Plateauwert für die Viskosität ein, welcher abgelesen wurde. Als sehr gute Werte wurden Viskositäten größer oder gleich 150 mPas angesehen (2000 ppm Copolymer in synthetischem Meerwasser bei 60°C und 7 Hz). Als gute Werte wurden Viskositäten von 120 bis 149 mPas angesehen. Als mäßig wurden Viskositätswerte von 80 bis 119 mPas angesehen. Viskositäten von kleiner 80 mPas wurden als schlecht angesehen.

### c) Bestimmung der Filtrierbarkeit

Vor dem eigentlichen Filtriertest wurde über ein 200 µm Retsch-Sieb filtriert und dabei der Gelanteil der Polymerlösung bestimmt.

Der Filtriert-Test zur Ermittlung des MPFR-Wertes - das Verhältnis der Durchflußrate des ersten Viertels zu der des vierten Viertels stellt das sogenannte "Milliporefilterratio" (MPFR) dar - wurde mittels einer Satorius-Druckfiltrationszelle 16249 (Filterdurchmesser 47 mm) und eines Isopore Polycarbonat-Membranfilters (Durchmesser 47 mm, 3 µm Porengröße) bei Raumtemperatur und 1 bar Überdruck durchgeführt. Man verwendete 210-220g Polymerlösung. Beim Test sollten mindestens 180 g Filtrat innerhalb von 30 Minuten austreten. Als gute Werte wurden MPFR von kleiner gleich 1,3 angesehen. Sind sie zwischen 1,3 und 1,6 wurde die Filtrierbarkeit als mäßig angesehen. Trat weniger als 30 g Filtrat durch, wurde die Probe als nicht filtrierbar angesehen.

### d) Bestimmung des Gelanteils

1 g des jeweiligen Copolymers der Herstellungsbeispiele 2 - 30 wurde in 249 g synthetischem Meerwasser nach DIN 50900 (Salzgehalt 35 g/l) 24 h lang bis zum vollständigen Lösen gerührt. Anschließend wurde die Lösung über ein Sieb mit der Maschenweite 200 µm filtriert und das Volumen des auf dem Sieb verbleibenden Rückstands gemessen. Der erhaltene Wert entspricht dem Gelanteil.

### Testergebnisse:

Die Testergebnisse sind in der folgenden Tabelle zusammengefasst.

| Beispiel | Copolymer | löslich | Viskosität | Filtrierbarkeit | Gelanteil |
|---|---|---|---|---|---|
| 2 | C2 basierend auf M2 | ja | gut | gut | 0 ml |
| | HBVE - 22 EO - 10,6 PeO (0,4 mol-% Kalium-Ionen, 4,6 mol-% Natrium-Ionen), Addition des PeO bei 140°C bis 3,2 bar | | | | |
| 3 | C3 basierend auf M3 | ja | gut | nicht filtrierbar | 2 ml |
| | HBVE - 22 EO - 10,5 PeO (0,4 mol-% Kalium-Ionen, 3,3 mol-% Natrium-Ionen), Addition des PeO bei 140°C bis 2,1 bar | | | | |
| 4 | C4 basierend auf M4 | ja | gut | gut | 0 ml |
| | HBVE - 22 EO - 10 PeO (0,4 mol-% Kalium-Ionen, 4,6 mol-% Natrium-Ionen), Addition des PeO bei 127°C bis 2,1 bar | | | | |
| 5 | C5 basierend auf M5 | ja | gut | nicht filtrierbar | 12 ml |
| | HBVE - 22 EO - 11 PeO (0,4 mol-% Kalium-Ionen, 4,6 mol-% Natrium-Ionen), Addition des PeO bei 127°C bis 2,1 bar | | | | |
| 6 | C6 basierend auf M6 | ja | gut | gut | 0 ml |
| | HBVE - 24,5 EO - 11 PeO (0,4 mol-% Kalium-Ionen, 4,6 mol-% Natrium-Ionen), Addition des PeO bei 127°C bis 2,1 bar | | | | |
| 7 | C7 basierend auf M7 | ja | gut | gut | 0 ml |
| | HBVE - 24,5 EO - 10 PeO (0,4 mol-% Kalium-Ionen, 4,6 mol-% Natrium-Ionen), Addition des PeO bei 127°C bis 2,1 bar | | | | |
| 8 | C8 basierend auf M8 | ja | gut | mäßig | 0-1 ml |
| | HBVE - 24,5 EO - 10 PeO (0,9 mol-% Kalium-Ionen, 4,1 mol-% Natrium-Ionen), Addition des PeO bei 127°C bis 2,1 bar | | | | |
| 9 | C9 basierend auf M9 | ja | gut | nicht filtrierbar | 3 ml |
| | HBVE - 24,5 EO - 10 PeO (1,5 mol-% Kalium-Ionen, 4,6 mol-% Natrium-Ionen), Addition des PeO bei 127°C bis 2,1 bar | | | | |
| 10 | C10 basierend auf M10 | ja | gut | gut | 0 ml |
| | HBVE - 24,5 EO - 10 PeO (0,4 mol-% Kalium-Ionen, 5,5 mol-% Natrium-Ionen), Addition des PeO bei 127°C bis 2,1 bar | | | | |
| 11 | C11 basierend auf M11 | ja | gut | gut | 0 ml |
| | HBVE - 24,5 EO - 9 PeO (0,4 mol-% Kalium-Ionen, 5,5 mol-% Natrium-Ionen), Addition des PeO bei 127°C bis 2,1 bar | | | | |
| 12 | C12 basierend auf M12 | ja | gut | nicht filtrierbar | 48 ml |
| | HBVE - 24,5 EO - 9 PeO (5,8 mol-% Kalium-Ionen), Addition des PeO bei 127°C bis 2,1 bar | | | | |
| 13 | C13 basierend auf M13 | ja | gut | mäßig | 0-1 ml |
| | HBVE - 24,5 EO - 8 PeO (0,4 mol-% Kalium-Ionen, 4,6 mol-% Natrium-Ionen), Addition des PeO bei 127°C bis 2,1 bar | | | | |
| 14 | C14 basierend auf M14 | ja | gut | mäßig | 0-1 ml |
| | HBVE - 26,5 EO - 10 PeO (0,4 mol-% Kalium-Ionen, 5,5 mol-% Natrium-Ionen), Addition des PeO bei 127°C bis 2,1 bar | | | | |
| 15 | C15 basierend auf M15 | ja | gut | gut | 0 ml |
| | HBVE - 24,5 EO - 10 PeO (0,4 mol-% Kalium-Ionen, 5,5 mol-% Natrium-Ionen), Addition des PeO bei 122°C bis 2,1 bar | | | | |
| 16 | C16 basierend auf M16 | ja | gut | gut | 0 ml |
| | HBVE - 24,5 EO - 10 PeO (0,4 mol-% Kalium-Ionen, 5,5 mol-% Natrium-Ionen), Addition des PeO bei 132°C bis 2,1 bar | | | | |
| 17 | C17 basierend auf M17 | ja | schlecht | gut | 0 ml |
| | HBVE - 24,5 EO - 10 BuO (0,4 mol-% Kalium-Ionen, 5,5 mol-% Natrium-Ionen), Addition des BuO bei 127°C bis 2,1 bar | | | | |
| 18 | C18 basierend auf M18 | ja | schlecht | gut | 0 ml |
| | HBVE - 24,5 EO - 12 BuO (0,4 mol-% Kalium-Ionen, 5,5 mol-% Natrium-Ionen), Addition des BuO bei 127°C bis 2,1 bar | | | | |
| 19 | C19 basierend auf M19 | ja | gut | gut | 0 ml |
| | HBVE - 24,5 EO - 14 BuO (0,4 mol-% Kalium-Ionen, 5,5 mol-% Natrium-Ionen), Addition des BuO bei 127°C bis 2,1 bar | | | | |
| 20 | C20 basierend auf M20 | ja | gut | gut | 0 ml |
| | HBVE - 24,5 EO - 16 BuO (0.4 mol-% Kalium-Ionen, 5,5 mol-% Natrium-Ionen), Addition des BuO bei 127°C bis 2,1 bar | | | | |
| 21 | C21 basierend auf M21 | ja | gut | nicht filtrierbar | 2 ml |
| | HBVE - 24.5 EO - 18 BuO (0,4 mol-% Kalium-Ionen, 5,5 mol-% Natrium-Ionen), Addition des BuO bei 127°C bis 2,1 bar | | | | |
| 22 | C22 basierend auf M22 | ja | gut | nicht filtrierbar | 5-10 ml |
| | HBVE - 24,5 EO - 16 BuO (5,8 mol-% Kalium-Ionen), Addition des BuO bei 127°C bis 3,1 bar | | | | |
| 23 | C23 basierend auf M23 | ja | gut | gut | 0 ml |
| | HBVE - 24,5 EO - 16 BuO (0,4 mol-% Kalium-Ionen, 11 mol-% Natrium-Ionen), Addition des BuO bei 127°C bis 3,1 bar | | | | |
| 24 | C24 basierend auf M24 | ja | sehr gut | gut | 0 ml |
| | HBVE - 23 EO - 17 BuO - 2,5 EO (0,4 mol-% Kalium-Ionen, 5,5 mol-% Natrium-Ionen), Addition des BuO bei 127°C bis 3,1 bar | | | | |
| 25 | C25 basierend auf M25 | ja | sehr gut | gut | 0 ml |
| | HBVE - 24,5 EO - 16 BuO - 3,5 EO (0,4 mol-% Kalium-Ionen, 5,5 mol-% Natrium-Ionen), Addition des BuO bei 127°C bis 3,1 bar | | | | |
| 26 | C26 basierend auf M26 | ja | sehr gut | gut | 0 ml |
| | HBVE - 24,5 EO - 16 BuO - 5 EO (0,4 mol-% Kalium-Ionen, 5,5 mol-% Natrium-Ionen), Addition des BuO bei 127°C bis 3,1 bar | | | | |
| 27 | C27 basierend auf M27 | ja | mäßig | gut | 0 ml |
| | HBVE - 24,5 EO - 10 BuO - 3,5 EO (0,4 mol-% Kalium-Ionen, 5,5 mol-% Natrium-Ionen), Addition des BuO bei 127°C bis 3,1 bar | | | | |
| 28 | C28 basierend auf M28 | ja | mäßig | gut | 0 ml |
| | HBVE - 24,5 EO - 5 BuO - 3,5 EO (0,4 mol-% Kalium-Ionen, 5,5 mol-% Natrium-Ionen), Addition des BuO bei 127°C bis 3,1 bar | | | | |
| 29 | C29 basierend auf M29 | ja | sehr gut | sehr gut | 0 ml |
| | HBVE - 24,5 EO - 22 BuO - 3,5 EO (0,4 mol-% Kalium-Ionen, 5,5 mol-% Natrium-Ionen), Addition des BuO bei 127°C bis 3,1 bar | | | | |
| 30 | C30basierend auf M30 | ja | sehr gut | gut | 0 ml |
| | HBVE - 24,5 EO - 16 BuO - 3,5 EO (0,4 mol-% Kalium-Ionen, 5,5 mol-% Natrium-Ionen), Addition des BuO bei 127°C von 4 bis 6 bar | | | | |

Beispiele 2 und 3 zeigen, dass das Druckfenster für die PeO-Dosage bei 140°C einen großen Einfluss auf die Produktqualität hat. Ein größeres Druckfenster ermöglicht eine rasche Dosage und kurze Zykluszeit (2 h für PeO). Hält man sich jedoch an die durch sicherheitstechnische Vorgaben bedingten Druckfenster wie in Beispiel 3 so zieht sich die Reaktion in die Länge (2 Tage für PeO). In Folge der hohen Temperatur kommt es zu Nebenreaktionen und die Ausbildung von Vernetzern, welche bei der späteren Copolymerisation bewirken, dass ein verdickendes nicht mehr filtrierbares Copolymer entsteht, welches für Einsätze in poröser Matrix (z.B. erdölführende Gesteinsschichten, Verdicker in der Erdölförderung) nicht mehr verwendbar sind.

Beispiel 4 zeigt, dass durch Absenkung der Reaktionstemperatur unter Einhaltung der kleinen Druckfenster Copolymere hergestellt werden können, die frei von Vernetzern sind. Wie in den Beispielen zu sehen ist, ist die Konzentration von Kalium-Ionen von zentraler Bedeutung. Wie die Beispiele 9 und 12 zeigen, ist oberhalb von 0.9 mol-% Kalium-Ionen das Polymer nicht mehr filtrierbar trotz Temperaturen von 127°C in der PeO-Dosage. Eine Kalium-Ionen Konzentration von größer als 0,9 mol-% führt offensichtlich zur Bildung von vernetzenden Verbindungen, welche zu einem nicht mehr filtrierbaren Copolymer führen. Zudem scheint auch der der exakte Gehalt an Natrium-Ionen-Katalysator eine wichtige Rolle zu spielen.

Überraschenderweise ist darüber hinaus zu sehen, dass auch das Hydrophil-Hydrophob-Verhältnis des Makromonomers von großer Bedeutung ist. Trotz vernetzerfreier Fahrweise lässt sich das Copolymer gemäß Beispiel 5 etwas schlechter filtrieren als Copolymere basierend auf Makromonomeren mit lediglich 1 eq PeO weniger (Beispiel 4). Werden Monomere mit 24,5 Einheiten EO verwendet, hat die Variation der PeO Einheiten keinen Einfluss auf die Filtrierbarkeit der Copolymere (Vergleich der Beispiele 6 und 7 und Vergleich der Beispiele 10 und 11). Die spezielle Auswahl eines Hydrophil-Hydrophob-Verhältnisses, d.h. Verhältnis von EO- und PeO Einheiten; führte zu einer überraschenden Robustheit des Verfahrens. Bei den Beispielen 10 und 11 (24,5 EO-Einheiten) macht sich eine Variation des PeO-Gehaltes nicht bemerkbar. Dadurch ist eine gute Stabilität für die großtechnische Produktion gegeben, bei der Schwankungen von weniger als 1 eq Alkylenoxid nicht einfach zu garantieren sind. Abweichungen von Verfahren und Struktur werden in der späteren Copolymer-Synthese bzw. Anwendung somit viel besser toleriert.

Ein ähnliches Bild zeigt sich bei Copolymeren basierend auf Makromonomeren M mit terminalen BuO-Gruppen. Ein Vergleich der Beispiele 20 und 22 zeigt, dass auch bei der Herstellung von Copolymeren basierend auf Makromonomeren mit terminalen BuO-Gruppen überraschenderweise eine Konzentration an Kalium-Ionen von kleiner 0,9 mol-% zu verbesserten Copolymeren führt. Zu hohe Werte an Kalium-Ionen führen im Copolymer zu nicht filtrierbaren Strukturen.

Die Beispiele 19 und 20 zeigen, dass sich optimale Produkteigenschaften (gute Viskositäten und gute Filtrierbarkeit) insbesondere bei einem Butoxylierungsgrad über 12 und unter 18 erreichen lassen. Ein Vergleich der Ergebnisse betreffend Makromonomeren mit terminalen PeO-Gruppen und betreffend Makromonomeren mit terminalen BuO-Gruppen hat zudem gezeigt, dass die Gesamtzahl an Kohlenstoffatomen in den Seitenketten der Makromonomeren, insbesondere in den terminalen Alkylenoxid-Blöcke, von entscheidender Bedeutung für die Eigenschaft der resultierenden Copolymere ist. Beispielsweise fällt die Gesamtzahl an Kohlenstoffatomen in den Seitenketten des terminalen Alkylenoxid-Blockes aus den Beispielen 19 und 20 (insgesamt 28 bis 32 Kohlenstoffatome in Seitenketten) mit dem Bereich der Gesamtzahl in den Beispielen 6, 10 und 11 (insgesamt 27 bis 33 Kohlenstoffatome in Seitenketten) betreffend Makromonomere mit terminale PeO-Gruppen zusammen. Andere Butoxylierungsgrade wie in den Beispielen 17, 18 und 21 führen zu nicht mehr in allen Bereichen optimalen Eigenschaften des Makromonomeres.

Es hat sich zudem gezeigt, dass es vorteilhaft sein kann, Makromonomere mit BuO-Blöcken, insbesondere Blöcke mit 16 bis 22 BuO-Einheiten, mit einem terminalen EO-Block zu modifizieren. Somit können insbesondere Copolymere mit sehr guten Viskositätseigenschaften und guter Filtrierbarkeit erhalten werden (Beispiele 24 bis 26 und 29). Dagegen scheint die Einführung eines terminalen EO-Blocks bei Makromonomeren mit weniger als 12 BuO-Einheiten im BuO-Block keinen besonders vorteilhaften Effekt zu bewirken (Beispiele 27 und 28).

Beispiel 23 zeigt, dass die Konzentration an Natrium-Ionen bei der Addition des Butylenoxids mindestens bis zu 11 mol-% betragen kann.

Beispiel 30 zeigt, dass auch bei Drücken von 4 bis 6 bar vorteilhaft die Addition von Butylenoxid möglich ist.

## Patentansprüche

1. Verfahren zur Herstellung eines Makromonomers M der allgemeinen Formel (I)
H₂C=C(R¹)-R²-O-(-CH₂-CH₂-O-)ₖ-(-CH₂-CH(R³)-O-)ₗ-(-CH₂-CH₂-O-)ₘ-R⁴ (I),
wobei die Einheiten (-CH₂-CH₂-O-)ₖ und (-CH₂-CH(R³)-O-)ₗ und optional -(-CH₂-CH₂-O-)ₘ in Blockstruktur in der in Formel (I) dargestellten Reihenfolge angeordnet sind;
wobei die Reste und Indices die folgenden Bedeutungen haben:
k: ist eine Zahl von 10 bis 150;
I: ist eine Zahl von 5 bis 25;
m: ist eine Zahl von 0 bis 15;
R¹: ist H oder Methyl;
R²: ist unabhängig voneinander eine Einfachbindung oder eine zweiwertige, verknüpfende Gruppe, ausgewählt aus der Gruppe bestehend aus - (CₙH₂ₙ)- und -O-(C_{n'}H_{2n'}), wobei n für eine natürliche Zahl von 1 bis 6 steht und n' für eine natürliche Zahl von 2 bis 6 steht;
R³: ist unabhängig voneinander ein Kohlenwasserstoffrest mit mindestens 2 Kohlenstoffatomen oder eine Ethergruppe der allgemeinen Formel -CH₂-O-R^{3'}, wobei R^{3'} für einen Kohlenwasserstoffrest mit mindestens 2 Kohlenstoffatomen steht;
R⁴: ist unabhängig voneinander H oder ein Kohlenwasserstoffrest mit 1 bis 4 Kohlenstoffatomen;
umfassend die Schritte
a) Umsetzen eines monoethylenisch ungesättigten Alkohols A1 der allgemeinen Formel (II)
H₂C=C(R¹)-R²-OH (II),
mit Ethylenoxid, wobei die Reste R¹ und R² die oben definierten Bedeutungen haben;
unter Zugabe eines alkalischen Katalysators K1 enthaltend KOMe und/oder NaOMe; wobei ein alkoxylierter Alkohol A2 erhalten wird;
b) Umsetzen des alkoxylierten Alkohols A2 mit mindestens einem Alkylenoxid Z der Formeln (Z) 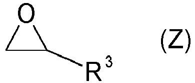 wobei R³ die oben definierte Bedeutung hat; unter Zugabe eines alkalischen Katalysators K2;
wobei die Konzentration an Kalium-Ionen bei der Umsetzung in Schritt b) kleiner oder gleich 0,9 mol-%, bezogen auf den eingesetzten Alkohol A2, beträgt;
und wobei die Umsetzung in Schritt b) bei einer Temperatur von kleiner oder gleich 135°C durchgeführt wird,
wobei ein alkoxylierter Alkohol A3 gemäß der Formel (III),
H₂C=C(R¹)-R²-O-(-CH₂-CH₂-O-)ₖ-(-CH₂-CH(R³)-O-)ₗ-R⁴ (III)
mit R⁴ = H erhalten wird, wobei die Reste R¹, R² und R³ und die Indices k und I die oben definierten Bedeutungen haben;
c) optional Umsetzen mindestens eines Teils des alkoxylierten Alkohols A3 mit Ethylenoxid; wobei ein alkoxylierter Alkohol A4 erhalten wird, der dem Makromonomer M gemäß Formel (I) mit R⁴ = H und m größer 0 entspricht;
d) optional Verethern des alkoxylierten Alkohols A3 und/oder A4 mit einer Verbindung
R⁴-X
wobei R⁴ ein Kohlenwasserstoffrest mit 1 bis 4 Kohlenstoffatomen ist, und X eine Abgangsgruppe ist;
und wobei ein Makromonomer M gemäß Formel (I) und/oder (III) mit R⁴ = Kohlenwasserstoffrest mit 1 bis 4 Kohlenstoffatomen erhalten wird.

2. Verfahren zur Herstellung eines Makromonomers M gemäß Anspruch 1, **dadurch gekennzeichnet, dass** die Konzentration an Kalium-Ionen bei der Umsetzung in Schritt b) 0,01 bis 0,5 mol-% bezogen auf den eingesetzten Alkohol A2 beträgt.

3. Verfahren zur Herstellung eines Makromonomers M gemäß einem der Ansprüche 1 oder 2, **dadurch gekennzeichnet, dass** der alkalische Katalysator K2 mindestens eine basische Natrium-Verbindung enthält.

4. Verfahren zur Herstellung eines Makromonomers M gemäß einem der Ansprüche 1 bis 3, **dadurch gekennzeichnet, dass** in Schritt b) ein Katalysator K2 enthaltend mindestens eine basische Natrium-Verbindung eingesetzt wird, wobei die Konzentration an Natrium-Ionen bei der Umsetzung in Schritt b) im Bereich von 3,5 bis 12 mol-%, bezogen auf den eingesetzten Alkohol A2, liegt.

5. Verfahren zur Herstellung eines Makromonomers M gemäß einem der Ansprüche 1 bis 4, **dadurch gekennzeichnet, dass** Schritt b) bei Temperaturen von 120 bis 135°C durchgeführt wird.

6. Verfahren zur Herstellung eines Makromonomers M gemäß einem der Ansprüche 1 bis 5, **dadurch gekennzeichnet, dass** Schritt b) die Zugabe des mindestens einen Alkylenoxids Z zu einer Mischung aus Alkohol A2 und alkalischen Katalysator K2 bei einem Druck im Bereich von 1 bis 3,1 bar umfasst.

7. Verfahren zur Herstellung eines Makromonomers M gemäß einem der Ansprüche 1 bis 6, **dadurch gekennzeichnet, dass** R³ für einen Kohlenwasserstoffrest mit 2 Kohlenstoffatomen steht und Schritt b) die Zugabe des mindestens einen Alkylenoxids Z zu einer Mischung aus Alkohol A2 und alkalischem Katalysator K2 bei einem Druck im Bereich von 1 bis 3,1 bar umfasst oder dass R³ für einen Kohlenwasserstoffrest mit mindestens 3 Kohlenstoffatomen steht und Schritt b) die Zugabe des mindestens einen Alkylenoxids Z zu einer Mischung aus Alkohol A2 und alkalischem Katalysator K2 bei einem Druck im Bereich von 1 bis 2,1 bar umfasst.

8. Verfahren zur Herstellung eines Makromonomers gemäß einem der Ansprüche 1 bis 7, **dadurch gekennzeichnet, dass** k eine Zahl von 23 bis 26 und I eine Zahl von 5 bis 25 ist, unter der Maßgabe, dass die Summe der Kohlenstoffatome in allen Kohlenwasserstoffresten R³ oder R^{3'} im Bereich von 15 bis 50 liegt.

9. Verfahren zur Herstellung eines Makromonomers gemäß einem der Ansprüche 1 bis 7, **dadurch gekennzeichnet, dass** die Reste und Indices die folgenden Bedeutungen haben:
k: ist eine Zahl von 20 bis 28;
l: ist eine Zahl von 5 bis 25;
m: ist eine Zahl von 0 bis 15;
R¹: ist H;
R²: ist unabhängig voneinander eine zweiwertige, verknüpfende Gruppe -O-(C_{n'}H_{2n'})-, wobei n' für eine natürliche Zahl von 3 bis 5 steht,
R³: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ oder R^{3'} im Bereich von 15 bis 50 liegt;
R⁴: ist H.

10. Verfahren zur Herstellung eines Makromonomers gemäß einem der Ansprüche 1 bis 9, **dadurch gekennzeichnet, dass** die Reste und Indices die folgenden Bedeutungen haben:
k: ist eine Zahl von 23 bis 26;
l: ist eine Zahl von 5 bis 25;
m: ist eine Zahl von 0 bis 15;
R¹: ist H;
R²: ist unabhängig voneinander eine zweiwertige, verknüpfende Gruppe -O-(C_{n'}H_{2n'})-, wobei n' für eine natürliche Zahl von 3 bis 5 steht,
R³: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ oder R^{3'} im Bereich von 15 bis 50 liegt;
R⁴: ist H.

11. Verfahren zur Herstellung eines Makromonomers gemäß einem der Ansprüche 1 bis 9, **dadurch gekennzeichnet, dass** die Reste und Indices die folgenden Bedeutungen haben:
k: ist eine Zahl von 23 bis 26;
l: ist eine Zahl von 7,5 bis 25;
m: ist eine Zahl von 0 bis 15;
R¹: ist H;
R²: ist unabhängig voneinander eine zweiwertige, verknüpfende Gruppe -O-(C_{n'}H_{2n'})-, wobei n' für eine natürliche Zahl von 3 bis 5 steht,
R³: ist Ethyl;
R⁴: ist H.

12. Verfahren zur Herstellung eines Makromonomers gemäß einem der Ansprüche 1 bis 9, **dadurch gekennzeichnet, dass** die Reste und Indices die folgenden Bedeutungen haben:
k: ist eine Zahl von 23 bis 26;
l: ist eine Zahl von 8,5 bis 11,5;
m: ist eine Zahl von 0 bis 15;
R¹: ist H;
R²: ist unabhängig voneinander eine zweiwertige, verknüpfende Gruppe -O-(C_{n'}H_{2n'})-, wobei n' für eine natürliche Zahl von 3 bis 5 steht,
R³: ist n-Propyl;
R⁴: ist H.

13. Verfahren zur Herstellung eines Makromonomers gemäß einem der Ansprüche 1 bis 12, **dadurch gekennzeichnet, dass** das Makromonomer M ein Gemisch darstellt aus einem Makromonomer M der Formel (I) mit m = 0 und einem Makromonomer M der Formel (I) mit m = 1 bis 15.

14. Verfahren zur Herstellung eines Makromonomers gemäß Anspruch 13, **dadurch gekennzeichnet, dass** das Gewichtsverhältnis des Makromonomers der Formel (I) mit m = 0 und des Makromonomers der Formel (I) mit m = 1 bis 15 im Bereich von 19 : 1 bis 1 : 19 liegt.

15. Makromonomer M der allgemeinen Formel (I)
H₂C=C(R¹)-R²-O-(-CH₂-CH₂-O-)ₖ-(-CH₂-CH(R³)-O-)ₗ-(-CH₂-CH₂-O-)ₘ-R⁴ (I),
wobei die Einheiten (-CH₂-CH₂-O-)ₖ und (-CH₂-CH(R³)-O-)ₗ und optional -(-CH₂-CH₂-O-)ₘ in Blockstruktur in der in Formel (I) dargestellten Reihenfolge angeordnet sind;
wobei die Reste und Indices die folgenden Bedeutungen haben:
k: ist eine Zahl von 20 bis 28;
l: ist eine Zahl von 5 bis 25;
m: ist eine Zahl von 0 bis 15;
R¹: ist H oder Methyl;
R²: ist unabhängig voneinander eine Einfachbindung oder eine zweiwertige, verknüpfende Gruppe, ausgewählt aus der Gruppe bestehend aus -(CₙH₂ₙ)- und -O-(C_{n'}H_{2n'})-, wobei n für eine natürliche Zahl von 1 bis 6 steht und n' für eine natürliche Zahl von 2 bis 6 steht;
R³: ist unabhängig voneinander ein Kohlenwasserstoffrest mit mindestens 2 Kohlenstoffatomen, unter der Maßgabe, dass die Summe der Kohlenstoffatome in allen Kohlenwasserstoffresten R³ im Bereich von 15 bis 50 liegt;
R⁴: ist unabhängig voneinander H oder ein Kohlenwasserstoffrest mit 1 bis 4 Kohlenstoffatomen;
erhältlich durch ein Verfahren gemäß einem der Ansprüche 1 bis 14.

16. Makromonomer M gemäß Anspruch 15 , **dadurch gekennzeichnet dass** die Reste und Indices der Formel (I) die folgenden Bedeutungen haben:
k: ist eine Zahl von 23 bis 26;
I: ist eine Zahl von 5 bis 25;
m: ist eine Zahl von 0 bis 15;
R¹: ist H oder Methyl;
R²: ist unabhängig voneinander eine Einfachbindung oder eine zweiwertige, verknüpfende Gruppe, ausgewählt aus der Gruppe bestehend aus -(CₙH₂ₙ)- und -O-(C_{n'}H_{2n'})-, wobei n für eine natürliche Zahl von 1 bis 6 steht und n' für eine natürliche Zahl von 2 bis 6 steht;
R³: ist unabhängig voneinander ein Kohlenwasserstoffrest mit mindestens 2 Kohlenstoffatomen, unter der Maßgabe, dass die Summe der Kohlenstoffatome in allen Kohlenwasserstoffresten R³ im Bereich von 15 bis 50 liegt;
R⁴: ist unabhängig voneinander H oder ein Kohlenwasserstoffrest mit 1 bis 4 Kohlenstoffatomen.

17. Makromonomer M gemäß einem der Ansprüche 15 oder 16, **dadurch gekennzeichnet dass** die Reste und Indices der Formel (I) die folgenden Bedeutungen haben:
k: ist eine Zahl von 23 bis 26;
I: ist eine Zahl von 5 bis 25;
m: ist eine Zahl von 0 bis 15;
R¹: ist H;
R²: ist unabhängig voneinander eine zweiwertige, verknüpfende Gruppe -O-(C_{n'}H_{2n'})-, wobei n' für eine natürliche Zahl von 3 bis 5 steht,
R³: ist unabhängig voneinander ein Kohlenwasserstoffrest mit 2 bis 4 Kohlenstoffatomen, unter der Maßgabe, dass die Summe der Kohlenstoffatome in allen Kohlenwasserstoffresten R³ im Bereich von 15 bis 50 liegt;
R⁴: ist H.

18. Makromonomer M der allgemeinen Formel (I)
H₂C=C(R¹)-R²-O-(-CH₂-CH₂-O-)ₖ-(-CH₂-CH(R³)-O-)ₗ-(-CH₂-CH₂-O-)ₘ-R⁴ (I),
wobei die Einheiten (-CH₂-CH₂-O-)ₖ und (-CH₂-CH(R³)-O-)ₗ und optional -(-CH₂-CH₂-O-)ₘ in Blockstruktur in der in Formel (I) dargestellten Reihenfolge angeordnet sind;
und die Reste und Indices die folgenden Bedeutungen haben:
k: ist eine Zahl von 20 bis 28;
l: ist eine Zahl von 5 bis 25;
m: ist eine Zahl von 0,1 bis 15;
R¹: ist H oder Methyl;
R²: ist unabhängig voneinander eine Einfachbindung oder eine zweiwertige, verknüpfende Gruppe, ausgewählt aus der Gruppe bestehend aus -(CₙH₂ₙ)- und -O-(C_{n'}H_{2n'})-, wobei n für eine natürliche Zahl von 1 bis 6 steht und n' für eine natürliche Zahl von 2 bis 6 steht;
R³: ist unabhängig voneinander ein Kohlenwasserstoffrest mit mindestens 2 Kohlenstoffatomen, unter der Maßgabe, dass die Summe der Kohlenstoffatome in allen Kohlenwasserstoffresten R³ im Bereich von 15 bis 50 liegt;
R⁴: ist unabhängig voneinander H oder ein Kohlenwasserstoffrest mit 1 bis 4 Kohlenstoffatomen.

19. Makromonomer M der allgemeinen Formel (I)
H₂C=C(R¹)-R²-O-(-CH₂-CH₂-O-)ₖ-(-CH₂-CH(R³)-O-)ₗ-(-CH₂-CH₂-O-)ₘ-R⁴ (I),
wobei die Einheiten (-CH₂-CH₂-O-)ₖ und (-CH₂-CH(R³)-O-)ₗ und optional -(-CH₂-CH₂-O-)ₘ in Blockstruktur in der in Formel (I) dargestellten Reihenfolge angeordnet sind;
und die Reste und Indices die folgenden Bedeutungen haben:
k: ist eine Zahl von 10 bis 150;
l: ist eine Zahl von 5 bis 25;
m: ist eine Zahl von 0,1 bis 15;
R¹: ist H oder Methyl;
R²: ist unabhängig voneinander eine Einfachbindung oder eine zweiwertige, verknüpfende Gruppe, ausgewählt aus der Gruppe bestehend aus -(CₙH₂ₙ)- und -O-(C_{n'}H_{2n'})-, wobei n für eine natürliche Zahl von 1 bis 6 steht und n' für eine natürliche Zahl von 2 bis 6 steht;
R³: ist unabhängig voneinander ein Kohlenwasserstoffrest mit 2 bis 4 Kohlenstoffatomen oder eine Ethergruppe der allgemeinen Formel-CH₂-O-R^{3'}, wobei R^{3'} für einen Kohlenwasserstoffrest mit mindestens 2 Kohlenstoffatomen steht, unter der Maßgabe, dass die Summe der Kohlenstoffatome in allen Kohlenwasserstoffresten R³ im Bereich von 15 bis 50 liegt;
R⁴: ist unabhängig voneinander H oder ein Kohlenwasserstoffrest mit 1 bis 4 Kohlenstoffatomen.

## Claims

1. A process for preparing a macromonomer M of the general formula (I)
H₂C=C(R¹)-R²-O-(-CH₂-CH₂-O-)ₖ-(-CH₂-CH(R³)-O-)ₗ-(-CH₂- CH₂-O-)ₘ-R⁴ (I)
where the (-CH₂-CH₂-O-)ₖ and (-CH₂-CH(R³)-O-)ₗ and optionally - (-CH₂-CH₂-O-)ₘ units are arranged in block structure in the sequence shown in formula (I);
where the radicals and indices are defined as follows:
k:is a number from 10 to 150;
l: is a number from 5 to 25;
m:is a number from 0 to 15;
R¹: is H or methyl;
R²: is independently a single bond or a divalent linking group selected from the group consisting of - (CₙH₂ₙ) - and -O-(C_{n'}H_{2n'}) -, where n is a natural number from 1 to 6 and n' is a natural number from 2 to 6;
R³: is independently a hydrocarbyl radical having at least 2 carbon atoms or an ether group of the general formula -CH₂-O-R^{3'}, where R^{3'} is a hydrocarbyl radical having at least 2 carbon atoms;
R⁴: is independently H or a hydrocarbyl radical having 1 to 4 carbon atoms;
comprising the steps of
a) reacting a monoethylenically unsaturated alcohol A1 of the general formula (II)
H₂C=C(R¹)-R²-OH (II)
with ethylene oxide, where the R¹ and R² radicals are as defined above;
with addition of an alkaline catalyst C1 comprising KOMe and/or NaOMe to obtain an alkoxylated alcohol A2;
b) reacting the alkoxylated alcohol A2 with at least one alkylene oxide Z of the formula (Z) 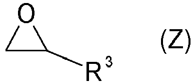 where R³ is as defined above;
with addition of an alkaline catalyst C2;
where the concentration of potassium ions in the reaction in step b) is less than or equal to 0.9 mol%, based on the alcohol A2 used;
and where the reaction in step b) is performed at a temperature less than or equal to 135°C, to obtain an alkoxylated alcohol A3 of the formula (III)
H₂C=C(R¹)-R²-O-(-CH₂-CH₂-O-)ₖ-(-CH₂-CH(R³)-O-)ₗ-R⁴ (III)
where R⁴ = H, where the R¹, R² and R³ radicals and the indices k and 1 are as defined above;
c) optionally reacting at least a portion of the alkoxylated alcohol A3 with ethylene oxide to obtain an alkoxylated alcohol A4 corresponding to the macromonomer M of the formula (I) where R⁴ = H and m is greater than 0;
d) optionally etherifying the alkoxylated alcohol A3 and/or A4 with a compound
R⁴-X
where R⁴ is a hydrocarbyl radical having 1 to 4 carbon atoms, and X is a leaving group;
to obtain a macromonomer M of the formula (I) and/or (III) where R⁴ = hydrocarbyl radical having 1 to 4 carbon atoms.

2. The process for preparing a macromonomer M according to claim 1, wherein the concentration of potassium ions in the course of reaction in step b) is 0.01 to 0.5 mol% based on the alcohol A2 used.

3. The process for preparing a macromonomer M according to either of claims 1 and 2, wherein the alkaline catalyst C2 comprises at least one basic sodium compound.

4. The process for preparing a macromonomer M according to any of claims 1 to 3, wherein a catalyst C2 comprising at least one basic sodium compound is used in step b), the concentration of sodium ions in the reaction in step b) being in the range from 3.5 to 12 mol%, based on the alcohol A2 used.

5. The process for preparing a macromonomer M according to any of claims 1 to 4, wherein step b) is performed at temperatures of 120 to 135°C.

6. The process for preparing a macromonomer M according to any of claims 1 to 5, wherein step b) comprises the addition of the at least one alkylene oxide Z to a mixture of alcohol A2 and alkaline catalyst C2 at a pressure in the range from 1 to 3.1 bar.

7. The process for preparing a macromonomer M according to any of claims 1 to 6, wherein R³ is a hydrocarbyl radical having 2 carbon atoms and step b) comprises the addition of the at least one alkylene oxide Z to a mixture of alcohol A2 and alkaline catalyst C2 at a pressure in the range from 1 to 3.1 bar, or R³ is a hydrocarbyl radical having at least 3 carbon atoms and step b) comprises the addition of the at least one alkylene oxide Z to a mixture of alcohol A2 and alkaline catalyst C2 at a pressure in the range from 1 to 2.1 bar.

8. The process for preparing a macromonomer according to any of claims 1 to 7, wherein k is a number from 23 to 26 and 1 is a number from 5 to 25, with the proviso that the sum total of the carbon atoms in all hydrocarbyl radicals R³ or R^{3'} is in the range from 15 to 50.

9. The process for preparing a macromonomer according to any of claims 1 to 7, wherein the radicals and indices are each defined as follows:
k:is a number from 20 to 28;
l: is a number from 5 to 25;
m:is a number from 0 to 15;
R¹: is H;
R²: is independently a divalent linking group -O-(C_{n'}H_{2n'})-, where n' is a natural number from 3 to 5,
R³: is independently a hydrocarbyl radical having 2 to 4 carbon atoms, with the proviso that the sum total of the carbon atoms in all hydrocarbyl radicals R³ or R^{3'} is in the range from 15 to 50;
R⁴: is H.

10. The process for preparing a macromonomer according to any of claims 1 to 9, wherein the radicals and indices are each defined as follows:
k:is a number from 23 to 26;
1: is a number from 5 to 25;
m:is a number from 0 to 15;
R¹: is H;
R²: is independently a divalent linking group -O-(C_{n'}H_{2n'})-, where n' is a natural number from 3 to 5,
R³: is independently a hydrocarbyl radical having 2 to 4 carbon atoms, with the proviso that the sum total of the carbon atoms in all hydrocarbyl radicals R³ or R^{3'} is in the range from 15 to 50;
R⁴: is H.

11. The process for preparing a macromonomer according to any of claims 1 to 9, wherein the radicals and indices are each defined as follows:
k:is a number from 23 to 26;
l: is a number from 7.5 to 25;
m:is a number from 0 to 15;
R¹: is H;
R²: is independently a divalent linking group -O-(C_{n'}H_{2n'})-, where n' is a natural number from 3 to 5,
R³: is ethyl;
R⁴: is H.

12. The process for preparing a macromonomer according to any of claims 1 to 9, wherein the radicals and indices are each defined as follows:
k: is a number from 23 to 26;
l: is a number from 8.5 to 11.5;
m:is a number from 0 to 15;
R¹: is H;
R²: is independently a divalent linking group -O-(C_{n'}H_{2n'})-, where n' is a natural number from 3 to 5,
R³: is n-propyl;
R⁴: is H.

13. The process for preparing a macromonomer according to any of claims 1 to 12, wherein the macromonomer M is a mixture of a macromonomer M of the formula (I) where m = 0 and a macromonomer M of the formula (I) where m = 1 to 15.

14. The process for preparing a macromonomer according to claim 13, wherein the weight ratio of the macromonomer of the formula (I) where m = 0 and the macromonomer of the formula (I) where m = 1 to 15 is in the range from 19 : 1 to 1 : 19.

15. A macromonomer M of the general formula (I)
H₂C=C(R¹)-R²-O-(-CH₂-CH₂-O-)ₖ-(-CH₂-CH(R³)-O-)ₗ-(-CH₂- CH₂-O-)ₘ-R⁴ (I)
where the (-CH₂-CH₂-O-)ₖ and (-CH₂-CH(R³)-O-)ₗ and optionally - (-CH₂-CH₂-O-)ₘ units are arranged in block structure in the sequence shown in formula (I); where the radicals and indices are each defined as follows:
k:is a number from 20 to 28;
l: is a number from 5 to 25;
m:is a number from 0 to 15;
R¹: is H or methyl;
R²: is independently a single bond or a divalent linking group selected from the group consisting of - (CₙH₂ₙ) - and -O-(C_{n'}H_{2n'})-, where n is a natural number from 1 to 6 and n' is a natural number from 2 to 6;
R³: is independently a hydrocarbyl radical having at least 2 carbon atoms, with the proviso that the sum total of the carbon atoms in all hydrocarbyl radicals R³ is in the range from 15 to 50;
R⁴: is independently H or a hydrocarbyl radical having 1 to 4 carbon atoms;
obtainable by a process according to any of claims 1 to 14.

16. A macromonomer M according to claim 15, wherein the radicals and indices of the formula (I) are each defined as follows:
k:is a number from 23 to 26;
l: is a number from 5 to 25;
m:is a number from 0 to 15;
R¹: is H or methyl;
R²: is independently a single bond or a divalent linking group selected from the group consisting of -(CₙH₂ₙ) - and -O-(C_{n'}H_{2n'})-, where n is a natural number from 1 to 6 and n' is a natural number from 2 to 6;
R³: is independently a hydrocarbyl radical having at least 2 carbon atoms, with the proviso that the sum total of the carbon atoms in all hydrocarbyl radicals R³ is in the range from 15 to 50;
R⁴: is independently H or a hydrocarbyl radical having 1 to 4 carbon atoms.

17. A macromonomer M according to either of claims 15 and 16, wherein the radicals and indices of the formula (I) are each defined as follows:
k:is a number from 23 to 26;
l: is a number from 5 to 25;
m:is a number from 0 to 15;
R¹: is H;
R²: is independently a divalent linking group -O-(C_{n'}H_{2n'})-, where n' is a natural number from 3 to 5,
R³: is independently a hydrocarbyl radical having 2 to 4 carbon atoms, with the proviso that the sum total of the carbon atoms in all hydrocarbyl radicals R³ is in the range from 15 to 50;
R⁴: is H.

18. A macromonomer M of the general formula (I)
H₂C=C(R¹)-R²-O-(-CH₂-CH₂-O-)ₖ-(-CH₂-CH(R³)-O-)ₗ-(-CH₂- CH₂-O-)ₘ-R⁴ (I)
where the (-CH₂-CH₂-O-)ₖ and (-CH₂-CH(R³)-O-)ₗ and optionally - (-CH₂-CH₂-O-)ₘ units are arranged in block structure in the sequence shown in formula (I); and the radicals and indices are each defined as follows:
k:is a number from 20 to 28;
l: is a number from 5 to 25;
m:is a number from 0.1 to 15;
R¹: is H or methyl;
R²: is independently a single bond or a divalent linking group selected from the group consisting of - (CₙH₂ₙ) - and -O-(C_{n'}H_{2n'})-, where n is a natural number from 1 to 6 and n' is a natural number from 2 to 6;
R³: is independently a hydrocarbyl radical having at least 2 carbon atoms, with the proviso that the sum total of the carbon atoms in all hydrocarbyl radicals R³ is in the range from 15 to 50;
R⁴: is independently H or a hydrocarbyl radical having 1 to 4 carbon atoms.

19. A macromonomer M of the general formula (I)
H₂C=C(R¹)-R²-O-(-CH₂-CH₂-O-)ₖ-(-CH₂-CH(R³)-O-)ₗ-(-CH₂- CH₂-O-)ₘ-R⁴ (I)
where the (-CH₂-CH₂-O-)ₖ and (-CH₂-CH(R³)-O-)ₗ and optionally - (-CH₂-CH₂-O-)ₘ units are arranged in block structure in the sequence shown in formula (I); and the radicals and indices are each defined as follows:
k:is a number from 10 to 150;
l: is a number from 5 to 25;
m:is a number from 0.1 to 15;
R¹: is H or methyl;
R²: is independently a single bond or a divalent linking group selected from the group consisting of - (CₙH₂ₙ) - and -O-(C_{n'}H_{2n'})-, where n is a natural number from 1 to 6 and n' is a natural number from 2 to 6;
R³: is independently a hydrocarbyl radical having 2 to 4 carbon atoms or an ether group of the general formula -CH₂-O-R^{3'}, where R^{3'} is a hydrocarbyl radical having at least 2 carbon atoms, with the proviso that the sum total of the carbon atoms in all hydrocarbyl radicals R³ is in the range from 15 to 50;
R⁴: is independently H or a hydrocarbyl radical having 1 to 4 carbon atoms.

## Revendications

1. Procédé de fabrication d'un macromonomère M de la formule générale (I)
H₂C=C(R¹)-R²-O-(-CH₂-CH₂-O-)ₖ-(-CH₂-CH(R³)-O-)ₗ-(-CH₂-CH₂- O-)ₘ-R⁴ (I),
dans laquelle les unités (-CH₂-CH₂-O-)ₖ et (-CH₂-CH(R³)-O-)ₗ et éventuellement -(-CH₂-CH₂-O-)ₘ sont agencées dans la structure de séquences dans l'ordre indiqué dans la formule (I) ;
dans laquelle les radicaux et indices ont les significations suivantes :
k : est un nombre de 10 à 150 ;
l : est un nombre de 5 à 25 ;
m : est un nombre de 0 à 15 ;
R¹ : est H ou méthyle ;
R² : est indépendamment une simple liaison ou un groupe de liaison bivalent, choisi dans le groupe constitué par - (CₙH₂ₙ) - et -O-(C_{n'}H_{2n'})-, n représentant un nombre naturel de 1 à 6 et n' représentant un nombre naturel de 2 à 6 ;
R³ : est indépendamment un radical hydrocarboné contenant au moins 2 atomes de carbone ou un groupe éther de la formule générale -CH₂-O-R^{3'}, R^{3'} représentant un radical hydrocarboné contenant au moins 2 atomes de carbone ;
R⁴ : est indépendamment H ou un radical hydrocarboné contenant 1 à 4 atomes de carbone ;
comprenant les étapes suivantes :
a) la mise en réaction d'un alcool monoéthyléniquement insaturé A1 de la formule générale (II)
H₂C=C(R¹)-R²-OH (II),
avec de l'oxyde d'éthylène, les radicaux R¹ et R² ayant les significations définies précédemment ;
avec ajout d'un catalyseur alcalin K1 contenant KOMe et/ou NaOMe ; un alcool alcoxylé A2 étant obtenu ;
b) la mise en réaction de l'alcool alcoxylé A2 avec au moins un oxyde d'alkylène Z de la formule (Z) 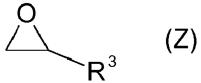 dans laquelle R³ a la signification définie précédemment ;
avec ajout d'un catalyseur alcalin K2 ; la concentration en ions potassium lors de la mise en réaction dans l'étape b) étant inférieure ou égale à 0,9 % en moles, par rapport à l'alcool A2 utilisé ;
et la mise en réaction dans l'étape b) étant réalisée à une température inférieure ou égale à 135 °C, un alcool alcoxylé A3 selon la formule (III),
H₂C=C(R¹)-R²-O-(-CH₂-CH₂-O-)ₖ- (-CH₂-CH(R³)-O-)ₗ-R⁴ (III)
avec R⁴ = H étant obtenu, les radicaux R¹, R² et R³ et les indices k et l ayant les significations définies précédemment ;
c) éventuellement la mise en réaction d'au moins une partie de l'alcool alcoxylé A3 avec de l'oxyde d'éthylène ; un alcool alcoxylé A4 étant obtenu, qui correspond au macromonomère M selon la formule (I) avec R⁴ = H et m supérieur à 0 ;
d) éventuellement l'éthérification de l'alcool alcoxylé A3 et/ou A4 avec un composé
R⁴-X
R⁴ étant un radical hydrocarboné contenant 1 à 4 atomes de carbone, et X étant un groupe partant ;
et un macromonomère M selon la formule (I) et/ou (III) avec R⁴ = radical hydrocarboné contenant 1 à 4 atomes de carbone étant obtenu.

2. Procédé de fabrication d'un macromonomère M selon la revendication 1, **caractérisé en ce que** la concentration en ions potassium lors de la mise en réaction dans l'étape b) est de 0,01 à 0,5 % en moles, par rapport à l'alcool A2 utilisé.

3. Procédé de fabrication d'un macromonomère M selon l'une quelconque des revendications 1 ou 2, **caractérisé en ce que** le catalyseur alcalin K2 contient au moins un composé de sodium basique.

4. Procédé de fabrication d'un macromonomère M selon l'une quelconque des revendications 1 à 3, **caractérisé en ce que**, dans l'étape b), un catalyseur K2 contenant au moins un composé de sodium basique est utilisé, la concentration en ions sodium lors de la mise en réaction dans l'étape b) se situant dans la plage allant de 3,5 à 12 % en moles, par rapport à l'alcool A2 utilisé.

5. Procédé de fabrication d'un macromonomère M selon l'une quelconque des revendications 1 à 4, **caractérisé en ce que** l'étape b) est réalisée à des températures de 120 à 135 °C.

6. Procédé de fabrication d'un macromonomère M selon l'une quelconque des revendications 1 à 5, **caractérisé en ce que** l'étape b) comprend l'ajout dudit au moins un oxyde d'alkylène Z à un mélange de l'alcool A2 et du catalyseur alcalin K2 à une pression dans la plage allant de 1 à 3,1 bar.

7. Procédé de fabrication d'un macromonomère M selon l'une quelconque des revendications 1 à 6, **caractérisé en ce que** R³ représente un radical hydrocarboné contenant 2 atomes de carbone, et l'étape b) comprend l'ajout dudit au moins un oxyde d'alkylène Z à un mélange de l'alcool A2 et du catalyseur alcalin K2 à une pression dans la plage allant de 1 à 3,1 bar, ou **en ce que** R³ représente un radical hydrocarboné contenant au moins 3 atomes de carbone, et l'étape b) comprend l'ajout dudit au moins un oxyde d'alkylène Z à un mélange de l'alcool A2 et du catalyseur alcalin K2 à une pression dans la plage allant de 1 à 2,1 bar.

8. Procédé de fabrication d'un macromonomère selon l'une quelconque des revendications 1 à 7, **caractérisé en ce que** k est un nombre de 23 à 26 et l est un nombre de 5 à 25, à condition que la somme des atomes de carbone dans tous les radicaux hydrocarbonés R³ ou R^{3'} se situe dans la plage allant de 15 à 50.

9. Procédé de fabrication d'un macromonomère M selon l'une quelconque des revendications 1 à 7, **caractérisé en ce que** les radicaux et indices ont les significations suivantes :
k : est un nombre de 20 à 28 ;
l : est un nombre de 5 à 25 ;
m : est un nombre de 0 à 15 ;
R¹ : est H ;
R² : est indépendamment un groupe de liaison bivalent - O-(C_{n'}H_{2n'})-, n' représentant un nombre naturel de 3 à 5,
R³: est indépendamment un radical hydrocarboné contenant 2 à 4 atomes de carbone, à condition que la somme des atomes de carbone dans tous les radicaux hydrocarbonés R³ ou R^{3'} se situe dans la plage allant de 15 à 50 ;
R⁴ : est H.

10. Procédé de fabrication d'un macromonomère selon l'une quelconque des revendications 1 à 9, **caractérisé en ce que** les radicaux et indices ont les significations suivantes :
k : est un nombre de 23 à 26 ;
l : est un nombre de 5 à 25 ;
m : est un nombre de 0 à 15 ;
R¹ : est H ;
R² : est indépendamment un groupe de liaison bivalent - O-(C_{n'}H_{2n'})-, n' représentant un nombre naturel de 3 à 5,
R³: est indépendamment un radical hydrocarboné contenant 2 à 4 atomes de carbone, à condition que la somme des atomes de carbone dans tous les radicaux hydrocarbonés R³ ou R^{3'} se situe dans la plage allant de 15 à 50 ;
R⁴ : est H.

11. Procédé de fabrication d'un macromonomère selon l'une quelconque des revendications 1 à 9, **caractérisé en ce que** les radicaux et indices ont les significations suivantes :
k : est un nombre de 23 à 26 ;
l : est un nombre de 7,5 à 25 ;
m : est un nombre de 0 à 15 ;
R¹ : est H ;
R² : est indépendamment un groupe de liaison bivalent - O-(C_{n'}H_{2n'})-, n' représentant un nombre naturel de 3 à 5, R³ : est éthyle ;
R⁴ : est H.

12. Procédé de fabrication d'un macromonomère selon l'une quelconque des revendications 1 à 9, **caractérisé en ce que** les radicaux et indices ont les significations suivantes :
k : est un nombre de 23 à 26 ;
l : est un nombre de 8,5 à 11,5 ;
m : est un nombre de 0 à 15 ;
R¹ : est H ;
R² : est indépendamment un groupe de liaison bivalent - O-(C_{n'}H_{2n'})-, n' représentant un nombre naturel de 3 à 5,
R³ : est n-propyle ;
R⁴ : est H.

13. Procédé de fabrication d'un macromonomère selon l'une quelconque des revendications 1 à 12, **caractérisé en ce que** le macromonomère M est un mélange d'un macromonomère M de la formule (I) avec m = 0 et d'un macromonomère M de la formule (I) avec m = 1 à 15.

14. Procédé de fabrication d'un macromonomère selon la revendication 13, **caractérisé en ce que** le rapport en poids entre le macromonomère de la formule (I) avec m = 0 et le macromonomère de la formule (I) avec m = 1 à 15 se situe dans la plage allant de 19:1 à 1:19.

15. Macromonomère M de la formule générale (I)
H₂C=C(R¹)-R²-O-(-CH₂-CH₂-O-)ₖ-(-CH₂-CH(R³)-O-)ₗ-(-CH₂-CH₂- O-)ₘ-R⁴ (I),
dans laquelle les unités -(-CH₂-CH₂-O-)ₖ et -(-CH₂-CH(R³)-O-)ₗ et éventuellement -(-CH₂-CH₂-O-)ₘ sont agencées dans la structure de séquences dans l'ordre indiqué dans la formule (I) ;
dans laquelle les radicaux et indices ont les significations suivantes :
k : est un nombre de 20 à 28 ;
l : est un nombre de 5 à 25 ;
m : est un nombre de 0 à 15 ;
R¹ : est H ou méthyle ;
R² : est indépendamment une simple liaison ou un groupe de liaison bivalent, choisi dans le groupe constitué par - (CₙH₂ₙ) - et -O-(C_{n'}H_{2n'})-, n représentant un nombre naturel de 1 à 6 et n' représentant un nombre naturel de 2 à 6 ;
R³ : est indépendamment un radical hydrocarboné contenant au moins 2 atomes de carbone, à condition que la somme des atomes de carbone dans tous les radicaux hydrocarbonés R³ se situe dans la plage allant de 15 à 50 ;
R⁴ : est indépendamment H ou un radical hydrocarboné contenant 1 à 4 atomes de carbone ;
pouvant être obtenu par un procédé selon l'une quelconque des revendications 1 à 14.

16. Macromonomère M selon la revendication 15, **caractérisé en ce que** les radicaux et indices de la formule (I) ont les significations suivantes :
k : est un nombre de 23 à 26 ;
l : est un nombre de 5 à 25 ;
m : est un nombre de 0 à 15 ;
R¹ : est H ou méthyle ;
R² : est indépendamment une simple liaison ou un groupe de liaison bivalent, choisi dans le groupe constitué par - (CₙH₂ₙ) - et -O-(C_{n'}H_{2n'})-, n représentant un nombre naturel de 1 à 6 et n' représentant un nombre naturel de 2 à 6 ;
R³ : est indépendamment un radical hydrocarboné contenant au moins 2 atomes de carbone, à condition que la somme des atomes de carbone dans tous les radicaux hydrocarbonés R³ se situe dans la plage allant de 15 à 50 ;
R⁴ : est indépendamment H ou un radical hydrocarboné contenant 1 à 4 atomes de carbone.

17. Macromonomère M selon l'une quelconque des revendications 15 ou 16, **caractérisé en ce que** les radicaux et indices de la formule (I) ont les significations suivantes :
k : est un nombre de 23 à 26 ;
l : est un nombre de 5 à 25 ;
m : est un nombre de 0 à 15 ;
R¹ : est H ;
R² : est indépendamment un groupe de liaison bivalent - O-(C_{n'}H_{2n'})-, n' représentant un nombre naturel de 3 à 5 ;
R³ : est indépendamment un radical hydrocarboné contenant 2 à 4 atomes de carbone, à condition que la somme des atomes de carbone dans tous les radicaux hydrocarbonés R³ se situe dans la plage allant de 15 à 50 ;
R⁴ : est H.

18. Macromonomère M de la formule générale (I)
H₂C=C(R¹)-R²-O-(-CH₂-CH₂-O-)ₖ-(-CH₂-CH(R³)-O-)ₗ-(-CH₂-CH₂- O-)ₘ-R⁴ (I),
dans laquelle les unités - (-CH₂-CH₂-O-)ₖ et -(-CH₂-CH(R³)-O-)ₗ et éventuellement -(-CH₂-CH₂-O-)ₘ sont agencées dans la structure de séquences dans l'ordre indiqué dans la formule (I) ;
et les radicaux et indices ont les significations suivantes :
k : est un nombre de 20 à 28 ;
l : est un nombre de 5 à 25 ;
m : est un nombre de 0,1 à 15 ;
R¹ : est H ou méthyle ;
R² : est indépendamment une simple liaison ou un groupe de liaison bivalent, choisi dans le groupe constitué par -(CₙH₂ₙ)- et -O-(C_{n'}H_{2n'})-, n représentant un nombre naturel de 1 à 6 et n' représentant un nombre naturel de 2 à 6 ;
R³ : est indépendamment un radical hydrocarboné contenant au moins 2 atomes de carbone, à condition que la somme des atomes de carbone dans tous les radicaux hydrocarbonés R³ se situe dans la plage allant de 15 à 50 ;
R⁴ : est indépendamment H ou un radical hydrocarboné contenant 1 à 4 atomes de carbone.

19. Macromonomère M de la formule générale (I)
H₂C=C(R¹)-R²-O-(-CH₂-CH₂-O-)ₖ-(-CH₂-CH(R³)-O-)ₗ-(-CH₂-CH₂- O-)ₘ-R⁴ (I),
dans laquelle les unités - (-CH₂-CH₂-O-)ₖ et - (-CH₂-CH(R³)-O-)ₗ et éventuellement -(-CH₂-CH₂-O-)ₘ sont agencées dans la structure de séquences dans l'ordre indiqué dans la formule (I) ;
et les radicaux et indices ont les significations suivantes :
k : est un nombre de 10 à 150 ;
l : est un nombre de 5 à 25 ;
m : est un nombre de 0,1 à 15 ;
R¹ : est H ou méthyle ;
R² : est indépendamment une simple liaison ou un groupe de liaison bivalent, choisi dans le groupe constitué par - (CₙH₂ₙ) - et -O-(C_{n'}H_{2n'})-, n représentant un nombre naturel de 1 à 6 et n' représentant un nombre naturel de 2 à 6 ;
R³ : est indépendamment un radical hydrocarboné contenant 2 à 4 atomes de carbone ou un groupe éther de la formule générale -CH₂-O-R^{3'}, R^{3'} représentant un radical hydrocarboné contenant au moins 2 atomes de carbone, à condition que la somme des atomes de carbone dans tous les radicaux hydrocarbonés R³ se situe dans la plage allant de 15 à 50 ;
R⁴ : est indépendamment H ou un radical hydrocarboné contenant 1 à 4 atomes de carbone.
